(19) Europäisches Patentamt
European Patent Office
Office européen des brevets

(11) EP 3 569 727 A1

(12) EUROPEAN PATENT APPLICATION
published in accordance with Art. 153(4) EPC

(43) Date of publication:
20.11.2019 Bulletin 2019/47

(51) Int Cl.:
C22C 38/00 (2006.01)    C22C 38/06 (2006.01)
C22C 38/60 (2006.01)    C21D 9/46 (2006.01)
C21D 9/52 (2006.01)

(21) Application number: 18739322.8

(22) Date of filing: 16.01.2018

(86) International application number:
PCT/JP2018/001076

(87) International publication number:
WO 2018/131722 (19.07.2018 Gazette 2018/29)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 16.01.2017   JP 2017005250
16.01.2017   JP 2017005258
16.01.2017   JP 2017005265

(71) Applicant: Nippon Steel Corporation
Tokyo 1008071 (JP)

(72) Inventors:
• HAYASHI, Koutarou
Tokyo 100-8071 (JP)
• KAIDO, Hiroshi
Tokyo 100-8071 (JP)
• OKAMOTO, Riki
Tokyo 100-8071 (JP)
• UENISHI, Akihiro
Tokyo 100-8071 (JP)

(74) Representative: Vossius & Partner
Patentanwälte Rechtsanwälte mbB
Siebertstrasse 3
81675 München (DE)

(54) **STEEL PLATE AND PRODUCTION METHOD THEREFOR**

(57) A steel sheet with a high concentration of contained Mn having an excellent uniform elongation characteristic and high strength is provided. A steel sheet characterized by containing, by mass%, C: greater than 0.10% and less than 0.55%, Si: 0.001% or more and less than 3.50%, Mn: greater than 4.00% and less than 9.00%, sol. Al: 0.001% or more and less than 3.00%, and a balance of iron and unavoidable impurities, wherein a metal structure at a position of 1/4 thickness from a surface in an L-cross-section of the steel sheet comprises, by area%, 25% to 90% of tempered martensite, 3% or less of ferrite, 10% to 75% of residual austenite, and 5% or less of bainite.

FIG. 1

**Description**

FIELD

The present disclosure relates to steel sheet having excellent formability and to a process for producing the same, more specifically relates to steel sheet having an excellent uniform elongation characteristic and high strength and high in concentration of contained Mn and to a process for producing the same.

BACKGROUND

To achieve both lighter weight and safety in auto bodies and parts etc., higher strength of the steel sheet used as the material for these is being pursued. In general, if making steel sheet higher in strength, the elongation falls and the formability of the steel sheet is impaired. Therefore, to use high strength steel sheet as a member for automobiles, it is necessary to raise both the contradictory characteristics of strength and formability.

To improve the elongation, up until now, so-called TRIP steel utilizing the transformation induced plasticity of residual austenite (residual $\gamma$) has been proposed (for example, PTL 1).

Residual austenite is obtained by causing C to concentrate in the austenite and thereby preventing the austenite from transforming to other structures even at room temperature. As art for stabilizing austenite, it has been proposed to comprise Si and A1 and other carbide precipitation inhibiting elements in the steel sheet so as to make C concentrate in the austenite during the bainite transformation which occurs in the steel sheet at the stage of producing the steel sheet. In this art, the greater the content of C contained in the steel sheet, the further stabler the austenite and the more the amount of residual austenite can be increased, and as a result steel sheet excellent in both strength and elongation can be produced. However, if steel sheet is used for a structural member, the steel sheet will often be welded, but if the content of C in the steel sheet is large, the weldability will become poorer, so there are limitations on use as a structural member. Therefore, it has been desired to improve both the elongation and strength of steel sheet by a smaller content of C.

Further, as steel sheet with an amount of residual austenite greater than the above TRIP steel and with a ductility exceeding the above TRIP steel, steel with greater than 4.0% of Mn added has been proposed (for example, NPL 1). The above steel contains a large amount of Mn, so there is also a remarkable effect of lightening the member used at. However, the above steel requires a long heating process such as box annealing. Therefore, the design of the material in a short heating process such as continuous annealing which is suitable for production of the high strength steel sheet used for automobile members has not been sufficiently studied. The requirements for improving the elongation characteristics in that case have not been clarified.

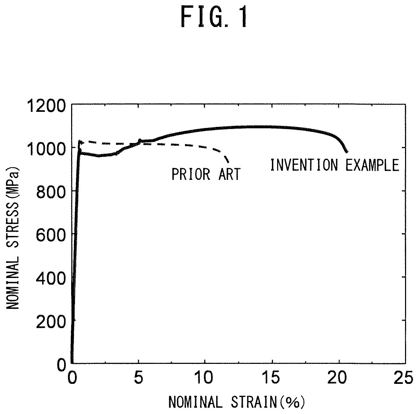

PTL 2 discloses steel sheet remarkably improved in elongation by cold rolling steel to which greater than 4.0% of Mn is added, heating it for a short time of 300 seconds to 1200 seconds, and controlling the area% of ferrite to 30% to 80%. However, the steel sheet described in PTL 2 is high in concentration of contained Mn and contains a large amount of non-recrystallized ferrite, so does not become work hardened and, as shown in FIG. 1 as prior art, is inferior in uniform elongation characteristic. That is, steel sheet with a high concentration of contained Mn which has such a ferrite containing structure cannot provide both the tensile strength and formability sought for steel sheet for automotive use.

[CITATION LIST]

[PATENT LITERATURE]

[PTL 1] Japanese Unexamined Patent Publication No. 5-59429
[PTL 2] Japanese Unexamined Patent Publication No. 2012-237054

[NON PATENT LITERATURE]

[NPL 1] Furukawa Takashi and Matsumura Osamu, Heat Treatment, Japan, the Japan Society for Heat Treatment, 1997, vol. no. 37, no. 4, p. 204

SUMMARY

[TECHNICAL PROBLEM]

Therefore, steel sheet having an excellent uniform elongation characteristic and high strength and high in concentration of contained Mn has been desired.

[SOLUTION TO PROBLEM]

To secure excellent an uniform elongation characteristic and high strength in steel sheet with a high concentration of contained Mn, the inventors discovered that it is effective to make the steel sheet contain, by area%, tempered martensite in 25% to 90%, ferrite in 3% or less, bainite in 5% or less, and residual austenite in 10% to 75%.

The steel sheet of the present disclosure was made based on the above discovery and has as its gist the following: **[0012]**

(1)

A steel sheet characterized by containing, by mass%,
C: greater than 0.10% and less than 0.55%,
Si: 0.001% or more and less than 3.50%,
Mn: greater than 4.00% and less than 9.00%,
sol. Al: 0.001% or more and less than 3.00%,
P: limited to 0.100% or less,
S: limited to 0.010% or less,
N: limited to less than 0.050%,
O: limited to less than 0.020%, and

a balance of iron and unavoidable impurities,
wherein a metal structure at a position of 1/4 thickness from a surface in an L-cross-section of the steel sheet comprises, by area%, 25% to 90% of tempered martensite, 3% or less of ferrite, 10% to 75% of residual austenite, and 5% or less of bainite.

(2) The steel sheet according to (1), wherein the metal structure at a position of 1/4 thickness from a surface in an L-cross-section of the steel sheet comprises, by area%, 1.0% or less of cementite.

(3) The steel sheet according to (1) or (2), wherein

the metal structure at a position of 1/4 thickness from a surface in an L-cross-section of the steel sheet comprises mixed structures comprised of the residual austenite and fresh martensite,
the mixed structures account for an area rate of 10% to 75% of the metal structure as a whole,
the residual austenite accounts for an area rate of 10% to 50% of the metal structure as a whole, and
structures with an aspect ratio of 1.5 or more and an angle formed by the long axis with the rolling direction of 30 degrees to 60 degrees in the mixed structures account for an area rate of 10% or more of the mixed structures as a whole.

(4) The steel sheet according to any one of (1) to (3), further containing, by mass%, one or more elements selected from the group consisting of
Cr: less than 2.00%,
Mo: 2.00% or less,
W: 2.00% or less,
Cu: 2.00% or less,
Ni: 2.00% or less,
Ti: 0.300% or less,
Nb: 0.300% or less,
V: 0.300% or less,
B: 0.010% or less,
Ca: 0.010% or less,
Mg: 0.010% or less,
Zr: 0.010% or less,
REM: 0.010% or less,

Sb: 0.050% or less,

Sn: 0.050% or less, and

Bi: 0.050% or less.

(5) The steel sheet according to (4), further containing, by mass%, one or more elements selected from the group consisting of

Cr: 0.01% or more and less than 2.00%,

Mo: 0.01% or more and 2.00% or less,

W: 0.01% or more and 2.00% or less,

Cu: 0.01% or more and 2.00% or less, and

Ni: 0.01% or more and 2.00% or less.

(6) The steel sheet according to (4) or (5), further containing, by mass%, one or more elements selected from the group consisting of

Ti: 0.005% or more and 0.300% or less,

Nb: 0.005% or more and 0.300% or less, and

V: 0.005% or more and 0.300% or less.

(7) The steel sheet according to any one of (4) to (6), further containing, by mass%, one or more elements selected from the group consisting of

B: 0.0001% or more and 0.010% or less,

Ca: 0.0001% or more and 0.010% or less,

Mg: 0.0001% or more and 0.010% or less,

Zr: 0.0001% or more and 0.010% or less, and

REM: 0.0001% or more and 0.010% or less.

(8) The steel sheet according to any one of (4) to (7), further containing, by mass%, one or more elements selected from the group consisting of

Sb: 0.0005% or more and 0.050% or less,

Sn: 0.0005% or more and 0.050% or less, and

Bi: 0.0005% or more and 0.050% or less.

(9) The steel sheet according to any one of (1) to (8), wherein the steel sheet comprises a hot dip galvanized layer at the surface of the steel sheet.

(10) The steel sheet according to any one of (1) to (8), wherein the steel sheet comprises a hot dip galvannealed layer at the surface of the steel sheet.

(11) A method for producing a steel sheet characterized by

hot rolling a steel material having chemical ingredients described in any one of (1) and (4) to (8) to obtain a hot rolled steel sheet,

pickling and cold rolling the hot rolled steel sheet to obtain a cold rolled steel sheet,

raising a temperature of the cold rolled steel sheet by a 5 to 30°C/sec average heating rate to 650°C and holding the cold rolled steel sheet at a 740°C or more temperature region for 10 seconds or more,

cooling the steel sheet in a temperature range from the temperature held at the 740°C or more temperature region down to 500°C or less by an average cooling rate of 2°C/sec to 2000°C/sec,

cooling down the steel sheet to room temperature after the cooling, and

after the cooling down of the steel sheet to room temperature, holding the steel sheet in a 600°C or more to less than $Ac_3$ point temperature region for 5 seconds or more.

(12) The method for producing a steel sheet according to (11), wherein the holding the steel sheet in the 600°C or more to less than $Ac_3$ point temperature region for 5 seconds or more comprises raising the temperature of the steel sheet in a 500°C to 600°C temperature range by an average 2 to 10°C/sec.

(13) The method for producing a steel sheet according to (11) or (12), wherein the average cooling rate is 200°C/sec to 2000°C/sec.

(14) The method for producing a steel sheet according to any one of (11) to (13), wherein the steel sheet is cooled in a temperature range from the temperature held at the 740°C or more temperature region down to 100°C or less by the average cooling rate.

(15) The method for producing a steel sheet according to any one of (11) to (14), wherein, after the cooling by the average cooling rate, the steel sheet is hold at the 100°C to 500°C temperature region for 10 seconds to 1000 seconds.

(16) The method for producing a steel sheet according to any one of (11) to (15), wherein, after the holding at the 600°C or more to less than $Ac_3$ point temperature region for 5 seconds or more, the steel sheet is cooled and hot dip galvanized.

(17) The method for producing a steel sheet according to (16), wherein, after the hot dip galvanizing, an alloying treatment of the hot dip galvanization is performed at a 450°C to 620°C temperature region.

[ADVANTAGEOUS EFFECTS OF INVENTION]

According to the present disclosure, it is possible to provide steel sheet with a high concentration of contained Mn having an excellent uniform elongation characteristic and high strength.

BRIEF DESCRIPTION OF DRAWINGS

FIG. 1 is a stress-strain curve of steel sheet.
FIG. 2 is a scan type electron micrograph of a metal structure of steel sheet obtained in the examples.
FIG. 3 shows an example of austenite bands in a band structure.

DESCRIPTION OF EMBODIMENTS

Below, embodiments of the steel sheet of the present disclosure will be explained.

1. Chemical Composition

The reason for prescribing the chemical composition of the steel sheet of the present disclosure as explained above will be explained. In the following explanation, the "%" showing the contents of the elements shall mean mass% unless particularly indicated otherwise.

C: greater than 0.10% and less than 0.55%

C is an extremely important element for raising the strength of steel and securing residual austenite. To obtain a sufficient amount of residual austenite, greater than 0.10% of content of C becomes necessary. On the other hand, if excessively containing C, the weldability of steel sheet is impaired, so the upper limit of the C content was made less than 0.55%.
The lower limit value of the C content is preferably 0.15% or more, more preferably 0.20% or more. By making the lower limit value of C content 0.15% or more and, furthermore, controlling the area rate of tempered martensite explained later to 35% to 70%, it becomes possible to obtain steel sheet with a high strength of a tensile strength (TS) of 1180 MPa or more without impairing the uniform elongation characteristic. The upper limit value of the C content is preferably 0.40% or less, more preferably 0.35% or less. By making the upper limit value of the C content the above range, it is possible to further improve the toughness of the steel sheet.

Si: 0.001% or more and less than 3.50%

Si is an element effective for strengthening the tempered martensite, making the structure uniform, and improving the workability. Further, Si has the action of suppressing the precipitation of cementite and promoting the remaining presence of austenite. To obtain the above effect, a 0.001% or more S content becomes necessary. On the other hand, if excessively containing Si, the plateability and chemical convertability of the steel sheet are impaired, so the upper limit value of Si content was made less than 3.50%.
The lower limit value of the Si content is preferably 0.01% or more, more preferably 0.30% or more, still more preferably 0.50% or more. By making the lower limit value of the Si content the above range, it is possible to further improve the uniform elongation characteristic of the steel sheet. The upper limit value of the Si content is preferably 3.00% or less, more preferably 2.50% or less.

Mn: greater than 4.00% to less than 9.00%

Mn is an element which stabilizes austenite and raises the hardenability. Further, in the steel sheet of the present disclosure, Mn is distributed throughout the austenite and stabilizes the austenite more. To stabilize the austenite at room temperature, greater than 4.00% of Mn is necessary. On the other hand, if the steel sheet excessively contains Mn, the ductility is impaired, so the upper limit of the Mn content was made less than 9.00%.
The lower limit value of the Mn content is preferably 4.30% or more, more preferably 4.80% or more. The upper limit value of the Mn content is preferably 8.00% or less, more preferably 7.50% or less. By making the lower limit value and upper limit value of the Mn content the above ranges, it is possible to further stabilize the austenite.

sol. Al: 0.001% or more and less than 3.00%

Al is a deoxidant and has to be contained in 0.001% or more. Further, Al expands the dual phase temperature region at the time of annealing, so also has the action of raising the stability of quality. The greater the content of Al, the greater the effect, but if excessively containing Al, deterioration of the surface properties, the coatability, the weldability, etc. is invited, so the upper limit of sol. Al was made less than 3.00%.
The lower limit value of the sol. Al content is preferably 0.005% or more, more preferably 0.01% or more, still more preferably 0.02% or more. The upper limit value of the sol. Al content is preferably 2.50% or less, more preferably 1.80% or less. By making the lower limit value and upper limit value of the sol. Al content the above ranges, the balance of the effect of deoxidation and the effect of improvement of the stability of quality with the surface properties, coatability, and weldability becomes better.

P: 0.100% or less

P is an impurity. If the steel sheet excessively contains P, it impairs the toughness and weldability. Therefore, the upper limit of the P content is made 0.100% or less. The upper limit value of the P content is preferably 0.050% or less, more preferably 0.030% or less, still more preferably 0.020% or less. The steel sheet according to the present embodiment does not require P, so the lower limit value of the P content is 0.000%. The lower limit value of the P content may also be greater than 0.000% or 0.001% or more, but the smaller the P content, the better.

S: 0.010% or less

S is an impurity. If the steel sheet excessively contains S, MnS stretched by hot rolling is formed and the deterioration of the bendability and hole expandability and other formability is invited. Therefore, the upper limit of the S content is made 0.010% or less. The upper limit value of the S content is preferably 0.007% or less, more preferably 0.003% or less. The steel sheet according to the present embodiment does not require S, so the lower limit value of the S content is 0.000%. The lower limit value of the S content may also be greater than 0.000% or 0.001% or more, but the smaller the S content, the better.

N: less than 0.050%

N is an impurity. If the steel sheet contains 0.050% or more of N, deterioration of the toughness is invited. Therefore, the upper limit of the N content is made less than 0.050%. The upper limit value of the N content is preferably 0.010% or less, more preferably 0.006% or less. The steel sheet according to the present embodiment does not require N, so the lower limit value of the N content is 0.000%. The lower limit value of the N content may also be made greater than 0.000% or 0.003% or more, but the smaller the N content, the better.

O: less than 0.020%

O is an impurity. If the steel sheet contains 0.020% or more of O, deterioration of the ductility is invited. Therefore, the upper limit of the O content is made less than 0.020%. The upper limit value of the O content is preferably 0.010% or less, more preferably 0.005% or less, still more preferably 0.003% or less. The steel sheet according to the present embodiment does not require O, so the lower limit value of the O content is 0.000%. The lower limit value of the O content may also be made greater than 0.000% or 0.001% or more, but the smaller the O content, the better.
The steel sheet of the present embodiment may further contain one or more elements selected from the group consisting of Cr, Mo, W, Cu, Ni, Ti, Nb, V, B, Ca, Mg, Zr, REM, Sb, Sn, and Bi. However, the steel sheet according to the present embodiment does not require Cr, Mo, W, Cu, Ni, Ti, Nb, V, B, Ca, Mg, Zr, REM, Sb, Sn, and Bi, so need not contain Cr, Mo, W, Cu, Ni, Ti, Nb, V, B, Ca, Mg, Zr, REM, Sb, Sn, and Bi, that is, the lower limit values of the contents may be 0%.

Cr: less than 2.00%

Mo: 2.00% or less

W: 2.00% or less

Cu: 2.00% or less

Ni: 2.00% or less

Cr, Mo, W, Cu, and Ni are respectively not elements essential for the steel sheet according to the present embodiment. However, Cr, Mo, W, Cu, and Ni are elements improving the strength of steel sheet, so may be contained. To obtain the effect of improvement of strength of the steel sheet, the steel sheet may contain one or more elements selected from the group consisting of Cr, Mo, W, Cu, and Ni in 0.01% or more. However, if the steel sheet excessively contains these elements, surface scratches will easily be caused at the time of hot rolling. Furthermore, sometimes the strength of the hot rolled steel sheet becomes too high and the cold rollability falls. Therefore, in the contents of the one or more elements selected from the group consisting of Cr, Mo, W, Cu, and Ni, the upper limit value of the content of Cr is made less than 2.00% and the upper limits of the contents of Mo, W, Cu, and Ni are made 2.00% or less.

Ti: 0.300% or less

Nb: 0.300% or less

V: 0.300% or less

Ti, Nb, and V are not elements essential for the steel sheet according to the present embodiment. However, Ti, Nb, and V are elements forming fine carbides, nitrides, or carbonitrides, so are effective for improving the strength of the steel sheet. Therefore, steel sheet may also contain one or more types of elements selected from the group consisting of Ti, Nb, and V. To obtain the effect of improvement of the strength of steel sheet, the lower limit values of content of the one or more types of elements selected from the group consisting of Ti, Nb, and V are preferably made 0.005% or more. On the other hand, if excessively containing these elements, sometimes the strength of the hot rolled steel sheet excessively rises and the cold rollability falls. Therefore, the upper limit values of content of the one or more types of elements selected from the group consisting of Ti, Nb, and V are respectively made 0.300% or less.

B: 0.010% or less

Ca: 0.010% or less

Mg: 0.010% or less

Zr: 0.010% or less

REM: 0.010% or less

B, Ca, Mg, Zr, and REM are not elements essential for the steel sheet of the present disclosure. However, B, Ca, Mg, Zr, and REM improve the local ductility and hole expandability of steel sheet. To obtain this effect, the lower limit values of the one or more types of elements selected from the group consisting of B, Ca, Mg, Zr, and REM are preferably 0.0001% or more, more preferably 0.001% or more. However, excessive amounts of these elements cause the workability of the steel sheet to deteriorate, so the upper limits of content of these elements are made preferably made 0.010% or less and the total of the contents of the one or more types of elements selected from the group consisting of B, Ca, Mg, Zr, and REM is preferably made 0.030% or less.

Sb: 0.050% or less

Sn: 0.050% or less

Bi: 0.050% or less

Sb, Sn, and Bi are not elements essential for the steel sheet of the present disclosure. However, Sb, Sn, and Bi keep the Mn, Si, and/or Al and other easily oxidizable elements in the steel sheet from being diffused in the steel sheet surface and forming oxides and improve the surface properties and plateability of the steel sheet. To obtain this effect, the lower limit values of content of the one or more type of elements selected from the group consisting of Sb, Sn, and Bi are made preferably 0.0005% or more, more preferably 0.001% or more. On the other hand, if the contents of these elements exceed 0.050%, the effect is saturated, so the upper limit values of content of these elements were respectively made 0.050% or less.

2. Metal Structure

Next, the metal structure of the steel sheet according to the present embodiment will be explained.
The metal structure at the position of 1/4 the thickness from the surface of the steel sheet according to the present embodiment (also called "1/4t part") contains, by area%, 25% to 90% of tempered martensite, 3% or less of ferrite, 10% to 75% of residual austenite, and 5% or less of bainite.
Preferably, the metal structure at the 1/4t part of the steel sheet contains, by area%, 1.0% or less of cementite.
Preferably, the metal structure at the 1/4t part of the steel sheet has tempered martensite as its matrix and contains mixed structures comprised of residual austenite and fresh martensite. The mixed structures account for an area rate of 10% to 75% of the metal structure as a whole. The residual austenite accounts for 10% to 50% of the metal structure as a whole. That is, the metal structure can contain 25 to 90% of tempered martensite, 10 to 50% of residual austenite, and 0 to 65% of fresh martensite.
The percentages of the structures change depending on the conditions of the annealing and have an effect on the strength, uniform elongation characteristic, hole expandability, and other material quality. Since the material quality requested, for example, changes depending on the part of the automobile, the annealing conditions may be selected in accordance with need and the percentages of the structures may be controled within the above ranges.
It is possible to polish the L-cross-section of the steel sheet to a mirror finish, then corrode it by 3% Nital (3% nitric acid-ethanol solution) and use a scan type electron microscope to examine the microstructure at the position of 1/4 the thickness from the surface of the steel sheet to measure the area% of the structures of tempered martensite, ferrite, cementite, residual austenite, bainite, and fresh martensite. Regarding the residual austenite and fresh martensite, first, a scan type electron microscope is used to measure the area% of the total of the residual austenite and fresh martensite. Furthermore, the area% of the residual austenite at the sheet thickness 1/4 position is measured by the X-ray diffraction method. Furthermore, the area% of the residual austenite is subtracted from the area% of the total of the residual austenite and fresh martensite to calculate the area% of the fresh martensite. The area rates of the residual austenite and fresh martensite include the area rates of the mixed structure. The "L-cross-section" means the surface cut so as to pass through the center axis of the steel sheet parallel to the sheet thickness direction and the rolling direction.

Area% of tempered martensite in metal structure at 1/4t part of steel sheet: 25 to 90 area%

Tempered martensite is a structure raising the strength of steel sheet and improving the ductility. To maintain both of the strength and ductility well within the ranges of the target strength levels, the area% of the tempered martensite is made 25 to 90 area%. The lower limit value of content of the tempered martensite is preferably 35 area%, more preferably 50 area%. The upper limit value of content of the tempered martensite is preferably 70 area%. As explained above, by controlling the content of C to 0.15% or more and furthermore, as explained later, the content of tempered martensite to 35 area% to 70 area%, it becomes possible to obtain steel sheet with a high strength of a tensile strength (TS) of 1180 MPa or more without the uniform elongation characteristic being impaired.

Area% of ferrite in metal structure at 1/4t part of steel sheet: 3% or less

In the steel sheet according to the present embodiment, it is important that the amount of ferrite in the metal structure be small. If the content of ferrite in the metal structure becomes greater, the uniform elongation characteristic remarkably falls. To keep the uniform elongation characteristic from remarkably falling, the area rate of ferrite in the metal structure is made 3% or less, more preferably 1% or less, still more preferably 0%.

Area% of cementite in metal structure at 1/4t part of steel sheet: 1.0% or less

In the steel sheet according to the present embodiment, preferably the amount of cementite in the metal structure is small. If making the content of cementite in the metal structure smaller, the uniform elongation characteristic is improved and the still more preferable range of 15000 MPa·% or more of the product "TS×uEL" of the tensile strength and uniform elongation characteristic is obtained. To improve the uniform elongation characteristic, the area rate of the cementite in the metal structure is made preferably 1.0% or less, more preferably 0%.

Area% of residual austenite in metal structure at 1/4t part of steel sheet: 10% to 75%

In the steel sheet according to the present embodiment, it is important that the amount of residual austenite in the metal structure be in a predetermined range. Residual austenite is a structure using transformation induced plasticity to raise the ductility and formability of the steel sheet, in particular the uniform elongation characteristic and hole expandability of the steel sheet. Residual austenite can be transformed to martensite by working accompanied with tensile deformation such as bulging, drawing, stretch flanging, or bending, so also contributes to improvement of the strength of the steel sheet. To obtain these effects, the steel sheet according to the present embodiment must contain an area rate of 10% or more of residual austenite in the metal structure.
The lower limit value of the area rate of the residual austenite is preferably 15%, more preferably 18%, still more preferably 20%. If the area rate of the residual austenite becomes 15% or more, the hole expandability is further improved. If the area rate of the residual austenite becomes 18% or more, the product "TS×uEL" of the tensile strength and the uniform elongation characteristic becomes preferably 13500 MPa·% or more, more preferably 14000 MPa·% or more, still more preferably 15000 MPa·% or more and the uniform elongation characteristic is maintained even with a higher strength.
The higher the area rate of residual austenite, the better. However, in steel sheet having the above-mentioned chemical ingredients, an area rate of 75% of residual austenite becomes the upper limit of content. If containing greater than 9.0% of Mn, the residual austenite can be made greater than 75 area%, but in this case, the ductility and castability of the steel sheet are impaired. From the viewpoint of improvement of the hole expandability, the area rate of the residual austenite is preferably 50% or less.

Area% of bainite in metal structure at 1/4t part of steel sheet: 5% or less

In the steel sheet according to the present embodiment, if bainite is present in the metal structure, the bainite contains hard structures of island-like martensite. If the bainite contains island-like martensite, the uniform elongation characteristic falls. To keep the uniform elongation characteristic from being lowered, the area rate of the bainite is made 5 area% or less, preferably 0 area%.

Area% of mixed structures of residual austenite and fresh martensite in metal structure at 1/4t part of steel sheet: 10% to 75%

In the steel sheet according to the present embodiment, preferably the mixed structures of residual austenite and fresh martensite in the metal structure account for an area rate of 10% to 75% with respect to the metal structure as a whole. The mixed structures of residual austenite and fresh martensite become substantially single hard fresh martensite structures due to the work induced transformation of the residual austenite. Further, residual austenite alone as well becomes substantially single hard fresh martensite structures due to work induced transformation. That is, the "mixed structures" mean structures of residual austenite alone if the area rate of fresh martensite is 0%. Therefore, by controlling the amount of the mixed structures of the residual austenite and fresh martensite or the amount and orientation of the structures of residual austenite alone, the hole expandability is improved. For this reason, from the viewpoint of improvement of the hole expandability, not only the amount of the residual austenite alone, but also the amount of the mixed structures substantially behaving as single fresh martensite structures after work induced transformation becomes important.
By making the area rate of the mixed structures of the fresh martensite and residual austenite 10% or more, the area rate of the residual austenite becomes 10% or more, so the hole expandability is improved. By making the area rate of the mixed structures 75% or less, it is possible to keep voids from being formed at the interface of the residual austenite and fresh martensite at the time of work induced transformation and possible to maintain excellent hole expandability. For this reason, preferably the area rate of the mixed structures of residual austenite and fresh martensite is made 10% to 75%. That is, so long as the area rate of the residual austenite is 10 to 50% in range and the area rate of the mixed structures is 10 to 75% in range, the area rate of the fresh martensite can be made 0 to 65%. The area rate of the mixed structures is preferably 15% to 70%, more preferably 20% to 65%.

"Fresh martensite" is martensite which is not tempered. Fresh martensite is a hard structure and is effective for securing the strength of the steel sheet. However, the smaller the content of the fresh martensite, the higher the bendability of the steel sheet. On the other hand, to reduce springback at the time of bending deformation, it is preferable to lower the flow stress at the time of forming the sheet. It is preferable to lower the yield ratio. For that purpose, the area rate of the fresh martensite should be large. Therefore, from the viewpoint of maintaining the bendability of the steel sheet while reducing the yield ratio, the metal structure of the steel sheet comprises an area rate of preferably greater than 0%, more preferably 1% or more, still more preferably 2% or more, further preferably 3% or more of fresh martensite. From the viewpoint of securing the bendability, the upper limit value of content of the fresh martensite is an area rate of preferably 55%, more preferably 45%, still more preferably 20%.

As residual structures other than tempered martensite, ferrite, cementite, residual austenite, bainite, and fresh martensite, tempered bainite is desirable. The area rate of the tempered bainite can be measured by observation by a scan type electron microscope in the same way as the measurement of the area rates of the tempered martensite, ferrite, cementite, residual austenite, bainite, and fresh martensite.

In the steel sheet according to the present embodiment, preferably the mixed structures of residual austenite and fresh martensite comprise structures having a 1.5 or more aspect ratio. The aspect ratio of the mixed structures can be measured based on the above observation of the microstructure by a scan type electron microscope. The "aspect ratio of the mixed structures" means the aspect ratio of regions (structures) where the contrast appears uniform in observation by a scan type electron microscope.

The orientation of the mixed structures having a 1.5 or more aspect ratio greatly affects the hole expandability. If the long axis of the mixed structures has an angle of less than 30 degrees with respect to the rolling direction, the mixed structures form structures oriented in the rolling direction, so the uniformity is impaired. If the long axis of the mixed structures has an angle of greater than 60 degrees with respect to the rolling direction, the mixed structures form structures oriented in the sheet thickness direction, so the uniformity is impaired. Therefore, when the long axis of the mixed structures has an angle of 30 degrees to 60 degrees with respect to the rolling direction, an excellent hole expandability is obtained. The angle of the long axis of the mixed structures with the rolling direction can be measured based on observation of the microstructure by the above scan type electron microscope.

The long axis of the mixed structures is the same as the length in the longitudinal direction in measurement of the aspect ratio of the mixed structures.

Furthermore, when the value of the area of mixed structures with an aspect ratio of 1.5 or more and a long axis of 30 degrees to 60 degrees with respect to the rolling direction divided by the area of all mixed structures is 10% or more, it is possible to keep the long axis of the mixed structures from becoming structures oriented in the rolling direction, possible to improve the hole expandability, and possible to obtain a 10% or more SF value in a stretch flange test. The ratio of the structures with an aspect ratio of 1.5 or more and an angle formed by the long axis with the rolling direction of 30 degrees to 60 degrees in the mixed structures is an area rate of 10% or more, preferably 20% or more. The ratio of the structures with an aspect ratio of 1.5 or more and an angle formed by the long axis with the rolling direction of 30 degrees to 60 degrees in the mixed structures may be measured based on observation of the microstructure by the above observation by a scan type electron microscope.

To derive the aspect ratio and direction of the long axis of the mixed structures from the microstructure by the above observation by a scan type electron microscope, specifically, for example, it is possible to do the following. First, the secondary moment of the region of each mixed structure covered are calculated. Next, the principal axis of inertia and main moment of inertia are calculated from this secondary moment. The ratio of the cubic root of the main moment of inertia in the direction of the first principal axis of inertia (principal axis of inertia with larger main moment of inertia) to the cubic root of the main moment of inertia in the direction of the second principal axis of inertia (principal axis of inertia with smaller main moment of inertia) is made the aspect ratio. The direction of the first principal axis of inertia is made the direction of the long axis.

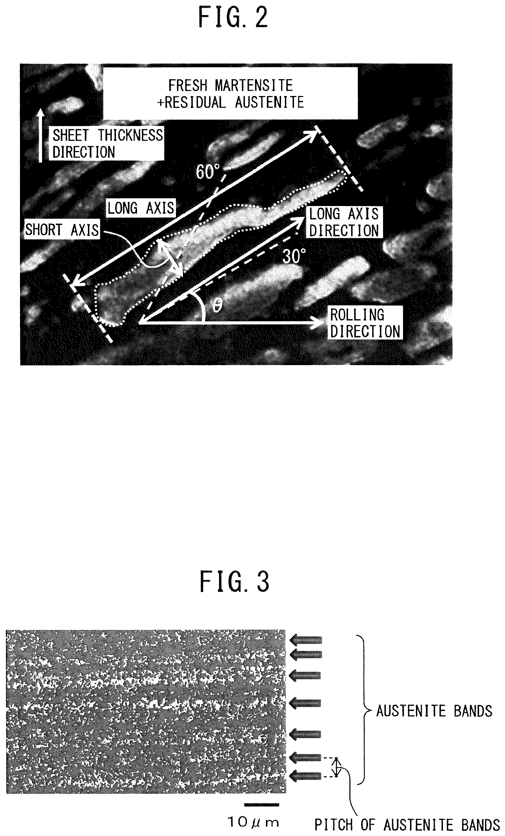

In the steel sheet according to the present embodiment, the interval (also called pitch) of the austenite bands in the band structure is preferably 12 μm or less. By the pitch of the austenite bands being within that range, the steel sheet has a more excellent hole expandability. FIG. 3 shows an example of the austenite bands of the band structure. In FIG. 3, the locations shown by the arrows are the austenite bands. FIG. 3 is an image of the distribution of austenite and ferrite in the range of 80 μm in the rolling direction of the sample and 40 μm in the thickness direction of the sample measured by EBSD (electron back scatter diffraction patterns). The pitch of the austenite bands of the band structure is the interval between one arrow and another arrow shown in FIG. 3. In the present application, the pitch of the austenite bands of the band structure can be calculated by using EBSD to measure the distribution image in a range of 80 μm in the sample rolling direction and 40 μm in the sample thickness direction and dividing the length 40 μm in the sample thickness direction by the number of peaks in the profile of the austenite volume rate along the sample thickness direction.

Next, the mechanical characteristics of the steel sheet according to the present embodiment will be explained.

The TS of the steel sheet according to the present embodiment is preferably 780 MPa or more, more preferably 1000 MPa or more, still more preferably 1180 MPa. This is because when using steel sheet as a material for an automobile, increasing the strength reduces the sheet thickness and contributes to lightening the weight. Further, by using the steel sheet according to the present embodiment for press forming, the uniform elongation characteristic (uEL) is desirably excellent. In this case, the TS×uEL is preferably 12000 MPa·% or more, more preferably 13500 MPa·% or more, still more preferably 14000 MPa·% or more, even more preferably 15000 MPa·% or more. Further, to use the steel sheet according to the present embodiment for press forming, the hole expandability is also desirably excellent. The hole expandability can be evaluated by the SF value. The SF value is preferably 10% or more, more preferably 12% or more, still more preferably 15% or more.

The steel sheet of the present disclosure, as explained above, has high strength and furthermore is excellent in uniform elongation characteristic, preferably is also excellent in hole expandability and excellent in formability, so is optimal for pillars, cross members, and other structural part applications of automobiles. Furthermore, the steel sheet of the present disclosure has a high concentration of contained Mn, so also contributes to lighter weight of the automobile, so the industrial contribution is extremely remarkable.

3. Process of Production

Next, the process of producing the steel sheet according to the present embodiment will be explained.

The steel sheet according to the present embodiment is produced by smelting steel having each of the above chemical compositions by an ordinary method, casting it to prepare a slab or ingot, heating and hot rolling this, pickling the obtained hot rolled steel sheet, then annealing it.

The hot rolling may be performed by a usual continuous hot rolling line. In the process of producing the steel sheet according to the present embodiment, the annealing may be performed by a continuous annealing line so productivity is excellent. If satisfying the later mentioned conditions, this may be performed by either of an annealing furnace and continuous annealing line. Furthermore, it is possible to cold roll the steel sheet, then roll it by skin pass rolling.

To obtain the metal structure of the steel sheet of the present disclosure, the heat treatment conditions, in particular the annealing conditions, are in the ranges shown below.

So long as the steel sheet according to the present embodiment has the above-mentioned chemical composition, the molten steel may be smelted by the usual blast furnace method. The raw materials may also contain large amounts of scrap like in the steel prepared by the electric furnace method. The slab may be produced by the usual continuous casting process and or may be produced by thin slab casting.

The above-mentioned slab or ingot is heated and hot rolled. The temperature of the steel material used for the hot rolling is preferably made 1100°C to 1300°C. By making the temperature of the steel material used for the hot rolling 1100°C or more, it is possible to reduce more the deformation resistance at the time of hot rolling. On the other hand, by making the temperature of the steel material used for the hot rolling 1300°C or less, it is possible to keep the yield from falling due to the increase in scale loss.

The time for holding the steel before the hot rolling at 1100°C to 1300°C in temperature region is not particularly limited, but to improve the bendability, it is preferably made 30 minutes or more. Making it 1 hour or more is more preferable. Further, to suppress excessive scale loss, it is preferably made 10 hours or less, more preferably is made 5 hours or less. Note that if performing direct feed rolling or direct rolling, it is also possible to use the steel for hot rolling without prior heat treatment.

The finish rolling start temperature is preferably made 700°C to 1000°C. The finish rolling start temperature is more preferably greater than 850°C, still more preferably 900°C or more. By making the finish rolling start temperature 700°C or more, it is possible to make the deformation resistance at the time of rolling smaller. By making the finish rolling start temperature more preferably greater than 850°C, still more preferably 900°C or more, brittle structures are preferentially formed at the large angle grain boundaries of the martensite structures and formation of ferrite at the hot rolled steel sheet is also suppressed, so the pitch of the austenite bands of the band structure can be narrowed and the hole expandability can be improved more. On the other hand, by making the finish rolling start temperature 1000°C or less, it is possible to suppress deterioration of the surface properties of the steel sheet due to grain boundary oxidation. The residual austenite has the same action as brittle structures, so "mixed structures of residual austenite and fresh martensite" and "brittle structures" are synonymous.

It is possible to cool and roll up the hot rolled steel sheet obtained by finish rolling to obtain a coil. It is preferable to make the coiling temperature after cooling 700°C or less. By making the coiling temperature 700°C or less, internal oxidation is suppressed and later pickling becomes easy. The coiling temperature is more preferably 650°C or less, still more preferably 600°C or less. To suppress fracture at the time of cold rolling, the hot rolled sheet may be cooled down to room temperature, then tempered at 300°C to 600°C before cold rolling.

The hot rolled steel sheet is pickled by an ordinary method, then is cold rolled to be made a cold rolled steel sheet.

If lightly rolling by greater than 0% to about 5% before cold rolling and before or after pickling to correct the shape, the result is advantageous in the point of securing flatness, so this is preferred. Further, by lightly rolling before pickling, there are the effects that the pickling ability is improved, removal of surface concentrating elements is promoted, and the chemical convertability and plateability are improved.

From the viewpoint of refining the structures of the steel sheet after annealing and narrowing the pitch of austenite bands in the band structure, the rolling reduction of the cold rolling is preferably made 20% or more. From the viewpoint of suppressing fracture during cold rolling, the rolling reduction of the cold rolling is preferably made 70% or less. The pitch of the austenite bands is preferably 12 $\mu$m or less. By making the pitch of the austenite bands 12 $\mu$m or less, the hole expandability can be improved more.

The cold rolled steel sheet obtained through the above hot rolling step and cold rolling step is heated to raise the temperature by a 5 to 30°C/sec average heating rate up to 650°C and held at a 740°C or more temperature region for 10 seconds or more, then is cooled over the temperature range from the temperature held in the 740°C or more temperature region down to 500°C or less by an average cooling rate of 2°C/sec to 2000°C/sec, is cooled down to room temperature, then is again heated and held in temperature region at 600°C or more and less than the $Ac_3$ point for 5 seconds or more. The heat treatment of the cold rolled steel sheet is preferably performed in a reducing atmosphere, more preferably a reducing atmosphere containing nitrogen and hydrogen, for example, a reducing atmosphere of nitrogen 98% and hydrogen 2%. By heat treatment in a reducing atmosphere, it is possible to prevent scale from depositing on the surface of the steel sheet and possible to send the sheet to the plating step as it is without requiring acid washing. It is preferable to hold the sheet at a 100°C to 500°C temperature region for 10 seconds to 1000 seconds, then cool it down to room temperature, then again heat it and hold it at a 600°C or more to less than $Ac_3$ point temperature region for 5 seconds or more.

Annealing conditions after cold rolling: Raising temperature by 5 to 30°C/sec average heating rate to 650°C and holding at 740°C or more temperature region for 10 seconds or more

After cold rolling, the sheet is raised in temperature by a 5 to 30°C/sec average heating rate up to 650°C and held in the 740°C or more temperature region for 10 seconds or more for first annealing. By making the annealing temperature after cold rolling 740°C or more, it is possible to make the distribution of ferrite in the steel sheet after annealing more uniform, possible to reduce the content of ferrite in the steel sheet, and possible to improve the uniform elongation characteristic, hole expandability, and strength. At that time, by raising the temperature by a 5 to 30°C/ sec average heating rate up to 650°C, it is possible to further reduce the content of ferrite in the metal structure and possible to make the area rate of ferrite in the metal structure 3% or less, more preferably 1% or less, still more preferably 0%.

The annealing temperature after cold rolling is preferably 740°C or more and the $Ac_3$ point or more. By making the annealing temperature after cold rolling 740°C or more and the $Ac_3$ point or more, it is possible to remarkably promote recrystallation and possible to make the content of ferrite in the steel sheet 0%. Here, the inventors studied making the heating rate 0.5 to 50°C/sec. As a result, as the $Ac_3$ point,

$$Ac_3 = 910 - 200\sqrt{C} + 44Si - 25Mn + 44Al$$

is obtained. It is possible to use this formula to calculate the $Ac_3$ point.

On the other hand, the upper limit of the annealing temperature after cold rolling is preferably 950°C or less. By making the annealing temperature 950°C or less, damage to the annealing furnace can be suppressed and the productivity can be improved. It is preferable to make the annealing temperature after cold rolling 800°C or less. By making the annealing temperature after cold rolling 800°C or less, it is possible reduce more the contents of ferrite and cementite in the metal structure.

To completely eliminate non-recrystallization and stably secure excellent toughness, the annealing time is made 10 seconds or more, preferably 40 seconds or more. From the viewpoint of the productivity, the annealing time is preferably made within 300 seconds.

Cooling conditions after annealing: Cooling over temperature range from temperature held at 740°C or more temperature region down to 500°C by average cooling rate of 2°C/sec to 2000°C/sec

In the cooling after annealing, the sheet is cooled over the temperature range from the temperature held at the 740°C or more temperature region down to 500°C by an average cooling rate of 2°C/sec to 2000°C/sec. By making the average cooling rate over the temperature range from the temperature held at the 740°C or more temperature region after annealing down to 500°C (below, also referred to as the average cooling rate after annealing) 2°C/sec or more, it is possible to suppress grain boundary segregation and improve the bendability and further possible to suppress the formation of ferrite at the cold rolled steel sheet, so it is possible to make the pitch of the austenite bands of the band structure narrower and further improve the hole expandability.

The average cooling rate after annealing is preferably 20°C/sec or more, more preferably 50°C/sec or more, still more preferably 200°C/sec or more, further more preferably 250°C/sec or more. By making the average cooling rate after annealing 200°C/sec or more, the sheet is cooled at the critical cooling rate or more and the steel material as a whole after cooling can be made a structure mainly comprised of martensite, so it is possible to easily control the structure after the final heat treatment and improve the stability of quality, possible to reduce fluctuations of the tensile strength, and, further, possible to further improve the hole expandability since the brittle structures are oriented at the austenite grain boundaries.

It is difficult to control the average cooling rate after annealing to 2000°C/sec or more even if using the water quenching cooling method or mist spray cooling method, so the substantial upper limit of the average cooling rate after annealing becomes 2000°C/sec.

In the cooling after annealing, the cooling stop temperature of the above range of average cooling rate is preferably 100°C or less, more preferably 80°C or less, still more preferably 50°C or less. By cooling the sheet by the above range of average cooling rate and making the cooling stop temperature the above temperature range, brittle structures are preferentially formed at the large angle grain boundaries of the martensite structures, so the hole expandability can be improved more.

Holding conditions after cooling: Holding in 100°C to 500°C temperature region for 10 seconds to 1000 seconds

Preferably, after the cooling after the annealing, the sheet is held in the 100°C to 500°C temperature region for 10 seconds to 1000 seconds. By making the holding time in the above temperature region 10 seconds or more, it is possible to make C sufficiently disperse in the austenite and better form austenite in the structure before the final heat treatment. As a result, it is possible to better suppress the formation of clumps of austenite in the structure after the final heat treatment and to better suppress fluctuations in the strength characteristics. On the other hand, even if the above holding time is greater than 1000 seconds, the effect due to the above action becomes saturated and the productivity falls. The holding time in the above temperature region is more preferably 30 seconds or more. From the viewpoint of the productivity, the holding time in the above temperature region is more preferably 300 seconds or less.

By making the holding temperature in the above temperature region preferably 100°C or more, more preferably 200°C or more, it is possible to improve the efficiency of the continuous annealing line. On the other hand, by making the above holding temperature preferably 500°C or less, it is possible to suppress grain boundary segregation and improve the bendability.

After the above cooling after annealing, preferably the steel sheet is held at the 100°C to 500°C temperature region, then is cooled down to room temperature.

Annealing conditions after cooling: Holding at 600°C or more to less than $Ac_3$ point temperature region for 5 seconds or more

After the above cooling of annealing, preferably after cooling down to room temperature, more preferably after holding in the 100°C to 500°C temperature region to cooling down to room temperature or after cooling down to room temperature to holding at the 100°C to 500°C temperature region, the steel sheet is again heated and held at the 600°C or more to less than $Ac_3$ point temperature region for 5 seconds or more. By making the annealing temperature 600°C or more to less than the $Ac_3$ point, the uniform elongation characteristic and hole expandability can be improved. From the viewpoint of more reliably dissolving the cementite and stably securing good toughness, the annealing time is made 5 seconds or more, preferably 30 seconds or more, more preferably 60 seconds or more. Further, from the viewpoint of the productivity, it is preferable to make the annealing time within 300 seconds. Preferably, when heating to a 600°C or more to less than $Ac_3$ point temperature region, the temperature is raised over a 500°C to 600°C temperature range by a 2 to 10°C/sec average heating rate. By raising the temperature over the 500°C to 600°C temperature range by a 2 to 10°C/sec average heating rate, it is possible to reduce the content of cementite in the metal structure. By this second annealing, the area rate of the cementite in the metal structure can be made 1.0% or less, more preferably 0%.

The steel sheet may be cooled after annealing down to room temperature as is if not plated. Further, if plating the steel sheet, it is produced in the following way.

If hot dip galvanizing the surface of the steel sheet to produce hot dip galvanized steel sheet, the above cooling after the annealing is stopped in the 430 to 500°C temperature range, then the cold rolled steel sheet is dipped in a hot dip galvanization bath for hot dip galvanization. The conditions of the plating bath may be made the usual ranges. After plating, the steel sheet may be cooled down to room temperature.

When hot dip galvannealing the surface of the steel sheet to produce a hot dip galvannealed steel sheet, the steel sheet is hot dip galvanized, then alloying treatment of the hot dip galvanization is performed at a 450 to 620°C temperature before cooling the steel sheet down to room temperature. The alloying treatment conditions may be made within the usual ranges.

By producing steel sheet in the above way, it is possible to obtain high strength steel sheet with a tensile strength (TS) of preferably 780 MPa or more, more preferably 1180 MPa or more. Due to this, when using steel sheet as a material for an automobile, it is possible to reduce the thickness by raising the strength and thereby contribute to lighter weight. Furthermore, it is possible to improve the uniform elongation characteristic (uEL) and possible to obtain steel sheet high in strength with a TS×uEL of preferably 12000 MPa·% or more and excellent in uniform elongation characteristic.

The steel sheet produced by the process of production of the present disclosure, as explained above, has a high strength, is excellent in uniform elongation characteristic as well, and is excellent in formability, so can be suitably used for applications as pillars and other structural parts of automobiles. Furthermore, after the annealing of the cold rolled steel sheet, by making the cooling stop temperature 100°C or less, it is possible to obtain steel sheet which is high in strength and excellent in uniform elongation characteristic and also excellent in hole expandability, so the sheet can be suitably used for applications as cross members and other structural parts of automobiles requiring stretch flanging.

Furthermore, the steel sheet of the present disclosure is high in concentration of contained Mn, so contributes also to lighter weight of automobiles. The contribution to industry is extremely remarkable.

EXAMPLES

The steel sheet of the present disclosure will be explained more specifically while referring to examples. However, the following examples are just illustrations of the steel sheet of the present disclosure and process of producing the same. The steel sheet of the present disclosure and process of producing the same are not limited to the following examples.

1. Production of Evaluation Use Steel Sheets

Steel having each of the chemical ingredients shown in Table 1 was smelted in a converter and continuously cast to obtain a 245 mm thick slab.

[Table 1]

Table 1

| Steel type | C | Si | Mn | sol. Al | P | S | N | O | Ac3 | Other |
|---|---|---|---|---|---|---|---|---|---|---|
| A | 0.31 | 0.02 | 4.98 | 0.04 | 0.010 | 0.001 | 0.004 | 0.001 | 677 | 0.001 Mg, 0.002Zr |
| B | 0.11 | 0.03 | 5.02 | 0.03 | 0.007 | 0.002 | 0.003 | 0.001 | 721 | |
| C | 0.16 | 1.97 | 4.99 | 0.04 | 0.011 | 0.001 | 0.003 | 0.001 | 794 | |
| D | 0.16 | 1.90 | 5.03 | 0.04 | 0.011 | 0.001 | 0.004 | 0.001 | 790 | 0.001Sb, 0.001Sn |
| E | 0.20 | 2.03 | 4.91 | 0.03 | 0.008 | 0.002 | 0.003 | 0.001 | 788 | |
| F | 0.08 | 0.04 | 4.68 | 0.04 | 0.010 | 0.001 | 0.004 | 0.001 | 740 | |
| G | 0.19 | 1.97 | 4.93 | 0.04 | 0.009 | 0.001 | 0.004 | 0.001 | 788 | 0.001Zr |
| H | 0.19 | 1.54 | 3.63 | 0.03 | 0.010 | 0.002 | 0.003 | 0.001 | 801 | |
| I | 0.29 | 0.02 | 7.04 | 0.04 | 0.009 | 0.002 | 0.004 | 0.001 | 629 | |
| J | 0.29 | 0.02 | 6.89 | 0.03 | 0.010 | 0.001 | 0.003 | 0.001 | 632 | 0.001 Bi |
| K | 0.11 | 2.01 | 5.81 | 0.03 | 0.012 | 0.002 | 0.003 | 0.001 | 788 | |
| L | 0.16 | 1.05 | 4.20 | 0.03 | 0.008 | 0.002 | 0.004 | 0.001 | 773 | 0.32Ni, 0.10Cu |
| M | 0.11 | 0.02 | 5.06 | 0.95 | 0.011 | 0.002 | 0.003 | 0.001 | 760 | 0.10Cr, 0.09Mo, 0.06W |
| N | 0.12 | 1.97 | 5.04 | 0.02 | 0.010 | 0.001 | 0.004 | 0.001 | 802 | 0.031 Ti, 0.023Nb |
| O | 0.16 | 2.03 | 5.02 | 0.02 | 0.011 | 0.002 | 0.003 | 0.001 | 795 | 0.049Ti, 0.201V |
| P | 0.30 | 0.01 | 4.99 | 0.03 | 0.009 | 0.001 | 0.003 | 0.001 | 677 | |
| Q | 0.29 | 0.02 | 5.03 | 0.04 | 0.010 | 0.001 | 0.004 | 0.001 | 679 | 0.001 B, 0.001Ca |
| R | 0.21 | 1.91 | 9.41 | 0.03 | 0.009 | 0.001 | 0.003 | 0.001 | 668 | |

(continued)

| Steel type | C | Si | Mn | sol. Al | P | S | N | O | Ac3 | Other |
|---|---|---|---|---|---|---|---|---|---|---|
| T | 0.48 | 1.94 | 4.84 | 0.03 | 0.011 | 0.002 | 0.003 | 0.001 | 737 | |
| U | 0.24 | 1.85 | 5.20 | 0.03 | 0.012 | 0.001 | 0.003 | 0.001 | 765 | |
| V | 0.30 | 0.03 | 4.96 | 0.03 | 0.009 | 0.001 | 0.004 | 0.001 | 679 | 0.001 REM(Sc) |

The obtained slab was hot rolled by the conditions shown in Table 2 to produce a 2.6 mm thick hot rolled steel sheet, then the obtained hot rolled steel sheet was pickled and cold rolled to produce a 1.2 mm thick cold rolled steel sheet.

[Table 2-1]

Table 2-1

| Ex. no. | Steel type | Holding temp. before hot rolling (°C) | Holding time before hot rolling (hr) | Finish rolling start temp. (°C) | Coiling temp.(°C) | Hot rolled sheet tempering temp.(°C) | Cold rolling rate (%) |
|---|---|---|---|---|---|---|---|
| 1 | A | 1250 | 1 | 920 | 550 | 500 | 40 |
| 2 | A | 1250 | 1 | 920 | 550 | 500 | 40 |
| 3 | A | 1250 | 1 | 920 | 550 | 500 | 40 |
| 4 | A | 1250 | 1 | 920 | 550 | 500 | 40 |
| 5 | A | 1250 | 1 | 920 | 550 | 500 | 40 |
| 6 | A | 1250 | 1 | 920 | 550 | 500 | 40 |
| 7 | B | 1250 | 1 | 920 | 550 | None | 40 |
| 8 | B | 1250 | 1 | 920 | 550 | None | 40 |
| 9 | B | 1250 | 1 | 920 | 550 | None | 40 |
| 10 | B | 1250 | 1 | 920 | 550 | None | 40 |
| 11 | C | 1250 | 1 | 920 | 550 | None | 40 |
| 12 | C | 1250 | 1 | 920 | 550 | None | 40 |
| 13 | C | 1250 | 1 | 920 | 550 | None | 40 |
| 14 | C | 1250 | 1 | 920 | 550 | None | 40 |
| 15 | D | 1250 | 1 | 920 | 550 | None | 40 |
| 16 | D | 1250 | 1 | 920 | 550 | None | 40 |
| 17 | E | 1250 | 1 | 920 | 550 | 500 | 40 |
| 18 | E | 1250 | 1 | 920 | 550 | 500 | 40 |
| 19 | F | 1250 | 1 | 920 | 550 | None | 40 |
| 20 | F | 1250 | 1 | 920 | 550 | None | 40 |
| 21 | F | 1250 | 1 | 920 | 550 | None | 40 |
| 22 | F | 1250 | 1 | 920 | 550 | None | 40 |
| 23 | G | 1250 | 1 | 920 | 550 | 350 | 40 |
| 24 | G | 1250 | 1 | 920 | 550 | 350 | 40 |
| 25 | G | 1250 | 1 | 920 | 550 | 350 | 40 |

(continued)

| Ex. no. | Steel type | Holding temp. before hot rolling (°C) | Holding time before hot rolling (hr) | Finish rolling start temp. (°C) | Coiling temp.(°C) | Hot rolled sheet tempering temp.(°C) | Cold rolling rate (%) |
|---|---|---|---|---|---|---|---|
| 26 | G | 1250 | 1 | 920 | 550 | 350 | 40 |
| 27 | H | 1250 | 1 | 920 | 550 | None | 40 |
| 28 | H | 1250 | 1 | 920 | 550 | None | 40 |
| 29 | I | 1250 | 1 | 920 | 550 | 500 | 40 |
| 30 | I | 1250 | 1 | 920 | 550 | None | 40 |
| 31 | I | 1250 | 1 | 920 | 550 | 500 | 40 |
| 32 | I | 1250 | 1 | 920 | 550 | None | 40 |
| 33 | J | 1250 | 1 | 920 | 550 | None | 40 |
| 34 | J | 1250 | 1 | 920 | 550 | None | 40 |

[Table 2-2]

Table 2-2

| Ex. no. | Steel type | Holding temp. (°C) before hot rolling (°C) | Holding time before hot rolling (hr) | Finish rolling start temp. (°C) | Coiling temp.(°C) | Hot rolled sheet tempering temp. (°C) | Cold rolling rate (%) |
|---|---|---|---|---|---|---|---|
| 35 | K | 1250 | 1 | 920 | 550 | 500 | 40 |
| 36 | K | 1250 | 1 | 800 | 550 | 500 | 40 |
| 37 | L | 1250 | 1 | 920 | 550 | None | 40 |
| 38 | L | 1250 | 1 | 920 | 550 | None | 40 |
| 39 | M | 1250 | 1 | 920 | 550 | 500 | 40 |
| 40 | M | 1250 | 1 | 920 | 550 | 500 | 40 |
| 41 | N | 1250 | 1 | 920 | 550 | 400 | 40 |
| 42 | N | 1250 | 1 | 920 | 550 | 400 | 40 |
| 43 | O | 1250 | 1 | 920 | 550 | None | 40 |
| 44 | O | 1250 | 1 | 920 | 550 | None | 40 |
| 45 | P | 1250 | 1 | 920 | 550 | 450 | 40 |
| 46 | P | 1250 | 1 | 920 | 550 | None | 40 |
| 47 | P | 1250 | 1 | 920 | 550 | 450 | 40 |
| 48 | P | 1250 | 1 | 920 | 550 | None | 40 |
| 49 | Q | 1250 | 1 | 920 | 550 | 500 | 40 |
| 50 | Q | 1250 | 1 | 920 | 550 | 500 | 40 |
| 51 | R | 1250 | 1 | 920 | 550 | 450 | 40 |
| 52 | T | 1250 | 1 | 920 | 550 | 500 | 40 |
| 53 | T | 1250 | 1 | 920 | 550 | 500 | 40 |
| 54 | T | 1250 | 1 | 920 | 550 | 500 | 40 |

(continued)

| Ex. no. | Steel type | Holding temp. (°C) before hot rolling (°C) | Holding time before hot rolling (hr) | Finish rolling start temp. (°C) | Coiling temp.(°C) | Hot rolled sheet tempering temp. (°C) | Cold rolling rate (%) |
|---|---|---|---|---|---|---|---|
| 55 | T | 1250 | 1 | 920 | 550 | 500 | 40 |
| 56 | U | 1250 | 1 | 920 | 500 | 500 | 40 |
| 57 | U | 1250 | 1 | 920 | 500 | 500 | 40 |
| 58 | V | 1250 | 1 | 920 | 550 | 500 | 40 |
| 59 | V | 1250 | 1 | 920 | 550 | 500 | 40 |
| 60 | N | 1250 | 1 | 830 | 550 | 400 | 40 |
| 61 | N | 1250 | 1 | 870 | 550 | 400 | 40 |
| 62 | N | 1250 | 1 | 870 | 550 | 400 | 15 |
| 63 | N | 1250 | 1 | 870 | 550 | 400 | 25 |
| 64 | N | 1250 | 1 | 920 | 550 | 580 | 40 |
| 65 | N | 1250 | 1 | 920 | 550 | 480 | 40 |
| 66 | N | 1250 | 1 | 920 | 550 | 580 | 40 |
| 67 | N | 1250 | 1 | 920 | 550 | 580 | 40 |
| 68 | N | 1250 | 1 | 920 | 550 | 580 | 40 |

The obtained cold rolled steel sheet was heat treated under the conditions shown in Table 3 to prepare an annealed cold rolled steel sheet. The cold rolled steel sheet was heated and held in the 740°C or more temperature region for 10 seconds or more, then was cooled in the temperature range from the temperature held in the 740°C or more temperature region down to 500°C or less by an average cooling rate of 2°C/sec to 2000°C/sec. After that, in some of the examples, the sheet was held in the 100°C to 500°C temperature region for 10 sec to 1000 sec. Next, the sheet was cooled down to room temperature, then reheated and held in the 600°C or more to less than $Ac_3$ point temperature region for 5 seconds or more. The cold rolled steel sheet was heat treated in a nitrogen 98% and hydrogen 2% reducing atmosphere.

[Table 3-1]

Table 3-1

| Ex no. | Steel type | Average temp elevation rate up to 650°C (°C/sec) | Annealing temp after cold rolling (°C) | Annealing time after cold rolling (sec) | Average cooling rate (°C/sec) | Cooling stop temp. (°C) | Holding temp. after stopping cooling (°C) | Holding time after stopping cooling (sec) | Average temp. elevation rate from 500°C to 600°C(°C/sec) | Final annealing temp (°C) | Final annealing time (sec) | Plating and alloying |
|---|---|---|---|---|---|---|---|---|---|---|---|---|
| 1 | A | 10 | 800 | 60 | 50 | 200 | 200 | 30 | 3 | 650 | 60 | |
| 2 | A | NA | NA | NA | NA | NA | NA | NA | 5 | 780 | 100 | |
| 3 | A | NA | NA | NA | NA | NA | NA | NA | 4 | 650 | 100 | |
| 4 | A | 6 | 800 | 60 | 250 | 30 | 200 | 30 | 8 | 620 | 60 | |
| 5 | A | NA | NA | NA | NA | NA | NA | NA | 5 | 780 | 100 | |
| 6 | A | NA | NA | NA | NA | NA | NA | NA | 5 | 650 | 100 | |
| 7 | B | 15 | 800 | 80 | 50 | 250 | 250 | 30 | 3 | 680 | 200 | |
| 8 | B | 10 | 800 | 80 | 50 | 250 | 250 | 30 | 5 | 720 | 200 | |
| 9 | B | 6 | 800 | 80 | 250 | 50 | 250 | 30 | 5 | 680 | 200 | |
| 10 | B | 10 | 800 | 80 | 500 | 30 | NA | NA | 5 | 720 | 200 | |
| 11 | C | 20 | 800 | 60 | 50 | 250 | 250 | 30 | 5 | 750 | 200 | |
| 12 | C | 10 | 800 | 60 | 50 | 250 | 250 | 30 | 7 | 750 | 200 | Plating |
| 13 | C | 10 | 800 | 60 | 250 | 30 | NA | NA | 5 | 750 | 200 | |
| 14 | C | 10 | 800 | 60 | 1000 | 50 | 250 | 30 | 5 | 750 | 200 | Plating |
| 15 | D | 6 | 800 | 80 | 50 | 250 | 250 | 30 | 8 | 725 | 200 | |
| 16 | D | 10 | 800 | 80 | 250 | 50 | 250 | 30 | 5 | 725 | 200 | |
| 17 | E | 10 | 800 | 40 | 50 | 250 | 250 | 30 | 3 | 700 | 60 | |
| 18 | E | 10 | 800 | 40 | 250 | 30 | NA | NA | 5 | 700 | 60 | |
| 19 | F | 10 | 800 | 60 | 50 | 250 | 250 | 30 | 5 | 650 | 200 | |
| 20 | F | 10 | 800 | 60 | 50 | 250 | 250 | 30 | 7 | 570 | 200 | |
| 21 | F | 10 | 800 | 60 | 500 | 50 | 250 | 30 | 5 | 800 | 200 | |

(continued)

| Ex no. | Steel type | Average temp elevation rate up to 650°C (°C/sec) | Annealing temp after cold rolling (°C) | Annealing time after cold rolling (sec) | Average cooling rate (°C/sec) | Cooling stop temp. (°C) | Holding temp. after stopping cooling (°C) | Holding time after stopping cooling (sec) | Average temp. elevation rate from 500°C to 600°C (°C/sec) | Final annealing temp (°C) | Final annealing time (sec) | Plating and alloying |
|---|---|---|---|---|---|---|---|---|---|---|---|---|
| 22 | F | 10 | 800 | 60 | 250 | 30 | NA | NA | 5 | 570 | 200 | |
| 23 | G | 10 | 800 | 60 | 50 | 250 | 250 | 30 | 5 | 675 | 60 | Alloying |
| 24 | G | 10 | 800 | 60 | 50 | 250 | 250 | 30 | 3 | 675 | 60 | |
| 25 | G | 6 | 800 | 60 | 500 | 30 | NA | NA | 5 | 675 | 60 | Alloying |
| 26 | G | 10 | 800 | 60 | 250 | 50 | 250 | 30 | 8 | 675 | 60 | |
| 27 | H | 10 | 800 | 40 | 50 | 250 | 250 | 30 | 5 | 630 | 200 | |
| 28 | H | 10 | 800 | 40 | 500 | 30 | NA | NA | 8 | 740 | 200 | |
| 29 | I | 10 | 800 | 70 | 50 | 250 | 250 | 30 | 5 | 620 | 60 | |
| 30 | I | NA | NA | NA | NA | NA | NA | NA | 3 | 620 | 60 | |
| 31 | I | 10 | 800 | 70 | 250 | 50 | 250 | 30 | 5 | 620 | 60 | |
| 32 | I | NA | NA | NA | NA | NA | NA | NA | 6 | 620 | 60 | |
| 33 | J | 6 | 800 | 60 | 50 | 200 | 200 | 30 | 7 | 630 | 80 | |
| 34 | J | 10 | 800 | 60 | 250 | 80 | 200 | 30 | 5 | 630 | 80 | |

[Table 3-2]

Table 3-2

| Ex no. | Steel type | Average temp elevation rate up to 650°C (°C/sec) | Annealing temp. after cold rolling (°C) | Annealing time after cold rolling (sec) | Average cooling rate (°C/sec) | Cooling stop temp. (°C) | Holding temp after stopping cooling (°C) | Holding time after stopping cooling (sec) | Average temp elevation rate from 500°C to 600°C (°C/sec) | Final annealing temp (°C) | Final annealing time (sec) | Plating and alloying |
|---|---|---|---|---|---|---|---|---|---|---|---|---|
| 35 | K | 10 | 730 | 80 | 50 | 250 | 250 | 30 | 8 | 740 | 200 | |
| 36 | K | 10 | 800 | 80 | 500 | 50 | 250 | 30 | 5 | 750 | 200 | |
| 37 | L | 10 | 800 | 60 | 50 | 200 | 200 | 30 | 5 | 730 | 200 | |
| 38 | L | 10 | 800 | 60 | 250 | 30 | NA | NA | 5 | 730 | 200 | |
| 39 | M | 10 | 800 | 40 | 50 | 200 | 200 | 30 | 3 | 710 | 200 | |
| 40 | M | 6 | 800 | 40 | 1000 | 30 | NA | NA | 5 | 710 | 200 | |
| 41 | N | 20 | 760 | 80 | 50 | 250 | 250 | 30 | 7 | 700 | 200 | |
| 42 | N | 10 | 760 | 80 | 250 | 50 | 250 | 30 | 5 | 700 | 200 | |
| 43 | O | 10 | 800 | 60 | 50 | 250 | 250 | 30 | 5 | 720 | 200 | |
| 44 | O | 10 | 800 | 60 | 250 | 30 | NA | NA | 8 | 720 | 200 | |
| 45 | P | 10 | 800 | 60 | 50 | 250 | 250 | 30 | 5 | 670 | 60 | |
| 46 | P | 10 | 620 | 60 | 50 | 200 | 200 | 30 | 4 | 600 | 60 | |
| 47 | P | 10 | 800 | 60 | 500 | 50 | 250 | 30 | 5 | 670 | 60 | |
| 48 | P | 6 | 620 | 60 | 250 | 50 | 200 | 30 | 5 | 600 | 60 | |
| 49 | Q | 10 | 800 | 60 | 50 | 250 | 250 | 30 | 6 | 670 | 60 | |
| 50 | Q | 6 | 800 | 60 | 500 | 30 | NA | NA | 3 | 670 | 60 | |
| 51 | R | 10 | 800 | 60 | 50 | 200 | 200 | 30 | 5 | 650 | 80 | |
| 52 | T | 10 | 800 | 60 | 50 | 250 | 250 | 30 | 5 | 650 | 60 | |
| 53 | T | 10 | 670 | 60 | 50 | 200 | 200 | 30 | 6 | 400 | 30 | |
| 54 | T | 10 | 800 | 60 | 500 | 30 | 250 | 30 | 5 | 650 | 60 | |
| 55 | T | 10 | 670 | 60 | 250 | 50 | 200 | 30 | 8 | 400 | 30 | |

| Ex no. | Steel type | Average temp elevation rate up to 650°C (°C/sec) | Annealing temp. after cold rolling (°C) | Annealing time after cold rolling (sec) | Average cooling rate (°C/sec) | Cooling stop temp. (°C) | Holding temp after stopping cooling (°C) | Holding time after stopping cooling (sec) | Average temp elevation rate from 500°C to 600°C (°C/sec) | Final annealing temp (°C) | Final annealing time (sec) | Plating and alloying |
|---|---|---|---|---|---|---|---|---|---|---|---|---|
| 56 | U | NA | NA | NA | NA | NA | NA | NA | 8 | 850 | 120 | |
| 57 | U | NA | NA | NA | NA | NA | NA | NA | 5 | 850 | 120 | |
| 58 | V | 10 | 800 | 60 | 50 | 250 | 250 | 30 | 4 | 650 | 60 | |
| 59 | V | 10 | 800 | 60 | 250 | 30 | 200 | 30 | 6 | 620 | 60 | |
| 60 | N | 6 | 800 | 80 | 250 | 50 | 250 | 30 | 5 | 720 | 200 | |
| 61 | N | 6 | 800 | 80 | 250 | 50 | 250 | 30 | 6 | 720 | 200 | |
| 62 | N | 6 | 800 | 80 | 250 | 50 | 250 | 30 | 4 | 720 | 200 | |
| 63 | N | 6 | 800 | 80 | 250 | 50 | 250 | 30 | 5 | 720 | 200 | |
| 64 | N | 6 | 800 | 60 | 250 | 50 | 250 | 30 | 5 | 710 | 100 | |
| 65 | N | 40 | 760 | 30 | 250 | 50 | 250 | 30 | 5 | 700 | 200 | |
| 66 | N | 3 | 770 | 80 | 250 | 50 | 250 | 30 | 6 | 700 | 200 | |
| 67 | N | 6 | 760 | 80 | 250 | 50 | 250 | 30 | 15 | 690 | 200 | |
| 68 | N | 10 | 760 | 80 | 250 | 50 | 250 | 30 | 1 | 680 | 200 | |

Some of the annealed cold rolled steel sheets were finally annealed, then stopped being cooled after the annealing at 460°C. The cold rolled steel sheets were dipped in a 460°C hot dip galvanization bath for 2 seconds to hot dip galvanize them. The conditions of the bath were the same as the conventional case. If not performing the later explained alloying, the sheets were held at 460°C, then cooled down to room temperature by an average cooling rate of 10°C/sec.

Some of the annealed cold rolled steel sheets were hot dip galvanized, then alloyed without cooling to room temperature. The steel sheets were heated up to 520°C, held at 520°C for 5 seconds to alloy them, then cooled by an average cooling rate of 10°C/sec down to room temperature.

The thus obtained annealed cold rolled steel sheets were temper rolled by an elongation rate of 0.1% to prepare various types of steel sheets for evaluation use.

2. Method of Evaluation

The annealed cold rolled steel sheet obtained by each of the examples was observed for microstructure and subjected to a tensile test, uniform elongation characteristic test, and stretch flange test to evaluate the area rates of tempered martensite, ferrite, cementite, residual austenite, bainite, tempered bainite, and fresh martensite, the area rate of the total of the residual austenite and fresh martensite, the aspect ratio and the angle formed by the long axis with the rolling direction of the mixed structures, the tensile strength (TS), the uniform elongation characteristic, the stretch flangeability (hole expandability), and pitch of the austenite bands. The methods of evaluation were as follows:

The area rates of tempered martensite, ferrite, cementite, residual austenite, bainite, tempered bainite, and fresh martensite were calculated by observation of the structure by a scan type electron microscope and measurement by X-ray diffraction. The steel sheet was cut in parallel with the sheet thickness direction and the rolling direction. The L-cross-section was polished to a mirror finish, then corroded by 3% Nital to reveal the microstructure. A 5000X scan type electron microscope was used to observe the microstructure at the 1/4 position from the surface. The image of a 0.1 mm×0.3 mm range was analyzed (Photoshop®) to calculate the area rates of tempered martensite, ferrite, cementite, bainite, tempered bainite, and fresh martensite and the area rate of the total of the residual austenite and fresh martensite. Furthermore, a test piece of a width of 25 mm and a length of 25 mm was cut out from each obtained steel sheet. This test piece was chemically polished to reduce it by 1/4 of the sheet thickness. The surface of the chemically polished test piece was analyzed by X-ray diffraction using a Co lamp three times. The obtained profiles were analyzed and averaged to calculate the area rate of the residual austenite. The area rate of the residual austenite was subtracted from the area rate of the total of the residual austenite and fresh martensite to calculate the area rate of the fresh martensite.

The aspect ratio and the angle formed by the long axis with the rolling direction in the mixed structures and the area rate of the structures with an aspect ratio of 1.5 or more and an angle formed by the long axis with the rolling direction of 30 degrees to 60 degrees with respect to the mixed structures as a whole were measured using the image analysis software ImageJ. First, a SEM was used to observe the microstructure at the 1/4 position from the surface by a 5000X power to obtain an SEM image (24 $\mu$m×18 $\mu$m). The SEM image was placed so that the rolling direction became horizontal. Next, ImageJ was used to form 1280×960 divided regions in the SEM image. Each divided region was binarized so that the mixed structures became black and the other regions became white. The threshold of the binarization was determined using the technique described in Glasbey, CA (1993), "An analysis of histogram-based thresholding algorithms", CVGIP: Graphical Models and Image Processing 55: 532-537" of employing the average value of luminance values as the threshold. This algorithm is loaded into ImageJ. The Auto Threshold function was utilized to make the method of determination of the threshold the Method=Mean for automatic binarization. That is, the binarization threshold was automatically determined by ImageJ from a histogram after setting Method=Mean and radius=15 and replacing the pixel values with the average of the pixel values within a radius of 15 pixels centered about the pixel focused on for smoothing. The binarized image was used to output the number of pixels (area), the long axis direction, and the aspect ratio for each mixed structure labeled to calculate the ratio of the mixed structures with an aspect ratio of 1.5 or more and an angle formed by the long axis with the rolling direction of 30 degrees to 60°C. Note that, the area rates of residual austenite and fresh martensite include the area rates of the mixed structures.

The pitch between austenite bands was calculated by using EBSD to measure the distribution image in a range of 80 $\mu$m in the sample rolling direction and 40 $\mu$m in the sample thickness direction and dividing the length 40 $\mu$m in the sample thickness direction by the number of peaks in the profile of the austenite volume rate along the sample thickness direction.

Method of testing mechanical properties

A JIS No. 5 tensile test piece was taken from a direction perpendicular to the rolling direction of the steel sheet and was measured for tensile strength (TS) and uniform elongation characteristic (uEL). The tensile test was performed by the method prescribed in JIS-Z2201 using a JIS No. 5 tensile test piece. The uniform elongation characteristic test was performed by the method prescribed in JIS-Z2201 using a JIS No. 5 tensile test piece with a length of the parallel part of 50 mm.

In the stretch flange test, a 120 mm×120 mm stretch flange use test piece was cut out. This was machined to cut a diameter 10 mm hole at its center. A cylindrical punch was inserted into the pierced test piece to enlarge the hole. The test was stopped at the point of time when the hole rim cracked up to the inside. The hole diameter "d" (unit: mm) was measured. The SF (stretch flange test value) is expressed by the following formula:

$$SF = 100 \times (d-10)/10$$

If the above mixed structures account for an area rate of 10% to 75% with respect to the metal structure as a whole, the residual austenite accounts for an area rate of 10% to 50% with respect to the metal structure as a whole, and structures in the mixed structures with an aspect ratio of 1.5 or more and with an angle formed by the long axis with the rolling direction of 30 degrees to 60 degrees account for an area rate of 10% or more of the mixed structures as a whole, when the pitch of the austenite bands in the band structure is greater than 12 $\mu$m, a 10 to 12% SF value can be obtained, when the pitch of the austenite bands is 12 $\mu$m or less, a 12% or more preferable SF value can be obtained, and when the pitch of the austenite bands is 11 $\mu$m or less, a 15% or more further preferable SF value can be obtained.

3. Results of Evaluation

The results of the above evaluation are shown in Table 4. In the invention examples, a 12000 MPa·% or more of TS×uEL was obtained. FIG. 1 shows a stress-strain curve of the steel sheets of the comparative example of Example No. 3 (prior art) and the invention example of Example No. 1. FIG. 2 shows a scan type electron micrograph of the metal structure of the steel sheet obtained in the invention example of Example No. 18 at the position of 1/4 the thickness from the surface at the L-cross-section. The part surrounded by the dotted lines is a mixed structure of residual austenite and fresh martensite. The remaining black parts are tempered martensite. The solid arrows show the rolling direction and the long axis direction of the mixed structure of residual austenite and fresh martensite, the broken lines show the range where the angle formed with the rolling direction is 30 degrees to 60 degrees, and the solid two-headed arrows show the lengths of the long axis and the short axis of the mixed structure. The angle formed by the long axis of the mixed structure with the rolling direction is expressed by $\theta$.

[Table 4-1]

Table 4-1

| Ex no. | Steel type | Tempered martensite area rate (%) | Ferrite area rate (%) | Residual austenite area rate (%) | Cementite area rate (%) | Bainite area rate (%) | Tempered bainite area rate (%) | Fresh martensite area rate (%) | Fresh martensite+ residual austenite area rate (%) | Ratio of mixed structures with aspect ratio of 1.5 or more and angle with respect to rolling direction of 30° to 60° with respect to all mixed structures (%) | TS (MPa) | uEL (%) | TS×uEL | Stretch flangeability (%) | Pitch of austenite bands (μm) | Remarks |
|---|---|---|---|---|---|---|---|---|---|---|---|---|---|---|---|---|
| 1 | A | 76.0 | 0 | 24 | 0.0 | 0 | 0 | 0 | 24 | 9.2 | 1087 | 13.8 | 15001 | 9.5 | 10 | Inv.ex. |
| 2 | A | 23.0 | 0 | 12 | 0.0 | 4 | 0 | 61 | 73 | 3.1 | 1725 | 3.5 | 6038 | 2.4 | 9 | Comp.ex. |
| 3 | A | 0.0 | 68 | 21 | 0.0 | 0 | 0 | 11 | 32 | 2.6 | 1024 | 2.1 | 2150 | 2.7 | 10 | Comp.ex. |
| 4 | A | 74.0 | 0 | 26 | 0.0 | 0 | 0 | 0 | 26 | 14.9 | 1092 | 15 | 16380 | 15.7 | 11 | Inv.ex. |
| 5 | A | 0.0 | 35 | 14 | 0.0 | 0 | 0 | 51 | 65 | 2.5 | 1717 | 3.2 | 5494 | 2.1 | 9 | Comp.ex. |
| 6 | A | 0.0 | 66 | 22 | 0.0 | 0 | 0 | 12 | 34 | 4.9 | 1019 | 2.1 | 2140 | 3.4 | 9 | Comp.ex. |
| 7 | B | 83.0 | 0 | 17 | 0.0 | 0 | 0 | 0 | 17 | 9.1 | 824 | 165 | 13596 | 9.5 | 8 | Inv.ex. |
| 8 | B | 27.0 | 0 | 22 | 0.0 | 0 | 0 | 51 | 73 | 8.7 | 1395 | 11.9 | 16601 | 9.2 | 8 | Inv.ex. |
| 9 | B | 82.0 | 0 | 18 | 0.0 | 0 | 0 | 0 | 18 | 20.2 | 833 | 17.7 | 14744 | 21.4 | 9 | Inv.ex. |
| 10 | B | 25.0 | 0 | 23 | 0.0 | 0 | 0 | 52 | 75 | 12.5 | 1392 | 12.1 | 16843 | 15.4 | 11 | Inv.ex. |
| 11 | C | 35.0 | 0 | 22 | 0.0 | 0 | 0 | 43 | 65 | 8.4 | 1402 | 12.4 | 17385 | 93 | 9 | Inv.ex. |
| 12 | C | 33.0 | 0 | 24 | 0.0 | 3 | 0 | 40 | 64 | 7.6 | 1385 | 14.3 | 19806 | 8.3 | 9 | Inv.ex. |
| 13 | C | 36.0 | 0 | 23 | 0.0 | 0 | 0 | 41 | 64 | 11.5 | 1395 | 13.2 | 18414 | 15.6 | 10 | Inv.ex. |

| Ex no. | Steel type | Tempered martensite area rate (%) | Ferrite area rate (%) | Residual austenite area rate (%) | Cementite area rate (%) | Bainite area rate (%) | Tempered bainite area rate (%) | Fresh martensite area rate (%) | Fresh martensite+ residual austenite area rate (%) | Ratio of mixed structures with aspect ratio of 1.5 or more and angle with respect to rolling direction of 30° to 60° with respect to all mixed structures (%) | TS (MPa) | uEL (%) | TS×uEL | Stretch flangeability (%) | Pitch of austenite bands (μm) | Remarks |
|---|---|---|---|---|---|---|---|---|---|---|---|---|---|---|---|---|
| 14 | C | 34.0 | 0 | 23 | 0.0 | 4 | 0 | 39 | 62 | 17.3 | 1367 | 12.8 | 17498 | 18.9 | 9 | Inv.ex. |
| 15 | D | 68.0 | 0 | 29 | 0.0 | 0 | 0 | 3 | 32 | 9.4 | 1276 | 15.4 | 19650 | 9.7 | 9 | Inv.ex. |
| 16 | D | 70.0 | 0 | 28 | 0.0 | 0 | 0 | 2 | 30 | 15.5 | 1284 | 13.5 | 17334 | 17.9 | 10 | Inv.ex. |
| 17 | E | 76.0 | 0 | 24 | 0.0 | 0 | 0 | 0 | 24 | 8.8 | 1180 | 16.7 | 19706 | 8.3 | 10 | Inv.ex. |
| 18 | E | 74.0 | 0 | 25 | 0.0 | 0 | 0 | 1 | 26 | 12.5 | 1203 | 14.7 | 17684 | 15.3 | 9 | Inv.ex. |
| 19 | F | 88.0 | 0 | 7 | 0.0 | 0 | 5 | 0 | 7 | 8.4 | 763 | 8.5 | 6486 | 8.2 | 9 | Comp.ex |
| 20 | F | 92.0 | 0 | 8 | 0.0 | 0 | 0 | 0 | 8 | 9.2 | 1153 | 7.3 | 8417 | 6.8 | 9 | Comp.ex. |
| 21 | F | 0.0 | 0 | 4 | 0.0 | 0 | 0 | 96 | 100 | NA*1 | 1254 | 4.2 | 5267 | 7.2 | NA*1 | Comp.ex. |
| 22 | F | 93.0 | 0 | 7 | 0.0 | 0 | 0 | 0 | 7 | 12.9 | 1128 | 6.7 | 7558 | 15.1 | 9 | Comp.ex. |
| 23 | G | 76.0 | 0 | 20 | 0.0 | 4 | 0 | 0 | 20 | 9.2 | 1054 | 14.7 | 15494 | 9.4 | 11 | Inv.ex. |
| 24 | G | 78.0 | 0 | 22 | 0.0 | 0 | 0 | 0 | 22 | 8.9 | 1062 | 14.4 | 15293 | 9.2 | 9 | Inv.ex. |
| 25 | G | 78.0 | 0 | 19 | 0.0 | 3 | 0 | 0 | 19 | 15.9 | 1058 | 14.2 | 15024 | 18.6 | 10 | Inv.ex. |
| 26 | G | 76.0 | 0 | 24 | 0.0 | 0 | 0 | 0 | 24 | 18.3 | 1049 | 14.8 | 15525 | 21.2 | 9 | Inv.ex. |
| 27 | H | 91.0 | 0 | 4 | 0.0 | 0 | 0 | 5 | 9 | 2.6 | 1003 | 6.3 | 6319 | 3.5 | 10 | Comp.ex. |

(continued)

| Ex no. | Steel type | Tempered martensite area rate (%) | Ferrite area rate (%) | Residual austenite area rate (%) | Cementite area rate (%) | Bainite area rate (%) | Tempered bainite area rate (%) | Fresh martensite area rate (%) | Fresh martensite+ residual austenite area rate (%) | Ratio of mixed structures with aspect ratio of 1.5 or more and angle with respect to rolling direction of 30° to 60° with respect to all mixed structures (%) | TS (MPa) | uEL (%) | TS×uEL | Stretch flangeability (%) | Pitch of austenite bands (μm) | Remarks |
|---|---|---|---|---|---|---|---|---|---|---|---|---|---|---|---|---|
| 28 | H | 66.0 | 0 | 6 | 0.0 | 0 | 0 | 28 | 34 | 13.5 | 1214 | 5.7 | 6920 | 15.0 | 8 | Comp.ex. |
| 29 | I | 64.0 | 0 | 36 | 0.0 | 0 | 0 | 0 | 36 | 9.7 | 1416 | 17.0 | 24072 | 9.2 | 9 | Inv.ex. |
| 30 | I | 0.0 | 79 | 21 | 0.0 | 0 | 0 | 0 | 21 | 1.5 | 1363 | 2.3 | 3135 | 1.3 | 10 | Comp.ex. |
| 31 | I | 65.0 | 0 | 35 | 0.0 | 0 | 0 | 0 | 35 | 18.9 | 1402 | 15.7 | 22011 | 152 | 8 | Inv.ex. |
| 32 | I | 0.0 | 82 | 18 | 0.0 | 0 | 0 | 0 | 18 | 2.2 | 1332 | 2.5 | 3330 | 2.6 | 9 | Comp.ex. |
| 33 | J | 64.0 | 0 | 36 | 0.0 | 0 | 0 | 0 | 36 | 8.6 | 1402 | 15.0 | 21030 | 9.4 | 10 | Inv.ex. |
| 34 | J | 64.0 | 0 | 36 | 0.0 | 0 | 0 | 0 | 36 | 14.3 | 1395 | 14.3 | 19949 | 15.4 | 9 | Inv.ex. |

*1. All structures are fresh martensite and residual austenite, so ratio of mixed structures with aspect ratio of 1.5 or more and angle with respect to rolling direction of 30° to 60° with respect to all mixed structures cannot be prescribed.

[Table 4-2]

[Table 4-2]

Table 4-2

| Ex no. | Steel type | Tempered martensite area rate (%) | Ferrite area rate (%) | Residual austenite area rate (%) | Cementite area rate (%) | Bainite area rate (%) | Tempered bainite area rate (%) | Fresh martensite area rate (%) | Fresh martensite+ residual austenite area rate (%) | Ratio of mixed structures with aspect ratio of 1.5 or more and angle with respect to rolling direction of 30° to 60° with respect to all mixed structures (%) | TS (MPa) | uEL (%) | TS×uEL | Stretch flangeability (%) | Pitch of austenite bands (μm) | Remarks |
|---|---|---|---|---|---|---|---|---|---|---|---|---|---|---|---|---|
| 35 | K | 31.0 | 16 | 15 | 0.0 | 0 | 0 | 38 | 53 | 8.5 | 1354 | 3.2 | 4333 | 7.5 | 11 | Comp.ex. |
| 36 | K | 52.0 | 0 | 19 | 0.0 | 0 | 0 | 29 | 48 | 11.6 | 1279 | 10.2 | 13046 | 10.4 | 14 | Inv.ex. |
| 37 | L | 77.0 | 0 | 23 | 0.0 | 0 | 0 | 0 | 23 | 8.3 | 921 | 24.3 | 22380 | 9.8 | 10 | Inv.ex. |
| 38 | L | 75.0 | 0 | 25 | 0.0 | 0 | 0 | 0 | 25 | 14.6 | 932 | 23.2 | 21622 | 16.3 | 8 | Inv.ex. |
| 39 | M | 82.0 | 0 | 18 | 0.0 | 0 | 0 | 0 | 18 | 9.4 | 953 | 15.1 | 14390 | 9.5 | 9 | Inv.ex. |
| 40 | M | 80.0 | 0 | 20 | 0.0 | 0 | 0 | 0 | 20 | 14.9 | 962 | 16.2 | 15584 | 17.2 | 9 | Inv.ex. |
| 41 | N | 74.0 | 3 | 23 | 0.0 | 0 | 0 | 0 | 23 | 8.2 | 1052 | 14.3 | 15044 | 9.2 | 9 | Inv.ex. |
| 42 | N | 75.0 | 2 | 22 | 0.0 | 0 | 0 | 1 | 23 | 10.4 | 1038 | 13.6 | 14117 | 15.3 | 10 | Inv.ex. |
| 43 | O | 79.0 | 0 | 21 | 0.0 | 0 | 0 | 0 | 21 | 9.1 | 1310 | 11.8 | 15458 | 9.5 | 8 | Inv.ex. |
| 44 | O | 78.0 | 0 | 22 | 0.0 | 0 | 0 | 0 | 22 | 14.4 | 1325 | 15.2 | 20140 | 152 | 8 | Inv.ex. |
| 45 | P | 71.0 | 0 | 29 | 0.0 | 0 | 0 | 0 | 29 | 8.7 | 1185 | 14.1 | 16709 | 9.6 | 10 | Inv.ex. |
| 46 | P | 13.0 | 73 | 14 | 0.0 | 0 | 0 | 0 | 14 | 9.4 | 1065 | 5.7 | 6071 | 9.3 | 9 | Comp.ex. |
| 47 | P | 70.0 | 0 | 28 | 0.0 | 0 | 0 | 2 | 30 | 19.0 | 1192 | 14.5 | 17284 | 20.3 | 9 | Inv.ex. |

EP 3 569 727 A1

| Ex no. | Steel type | Tempered martensite area rate (%) | Ferrite area rate (%) | Residual austenite area rate (%) | Cementite area rate (%) | Bainite area rate (%) | Tempered bainite area rate (%) | Fresh martensite area rate (%) | Fresh martensite+ residual austenite area rate (%) | Ratio of mixed structures with aspect ratio of 1.5 or more and angle with respect to rolling direction of 30° to 60° with respect to all mixed structures (%) | TS (MPa) | uEL (%) | TS×uEL | Stretch flangeability (%) | Pitch of austenite bands (μm) | Remarks |
|---|---|---|---|---|---|---|---|---|---|---|---|---|---|---|---|---|
| 48 | P | 12.0 | 74 | 14 | 0.0 | 0 | 0 | 0 | 14 | 10.3 | 1057 | 4.8 | 5074 | 15.1 | 9 | Comp.ex. |
| 49 | Q | 70.0 | 0 | 27 | 0.0 | 0 | 0 | 3 | 30 | 8.5 | 1191 | 13.2 | 15721 | 9.0 | 8 | Inv.ex. |
| 50 | Q | 69.0 | 0 | 28 | 0.0 | 0 | 0 | 3 | 31 | 12.1 | 1188 | 12.9 | 15325 | 17.9 | 11 | Inv.ex. |
| 51 | R | 55.0 | 0 | 45 | 0.0 | 0 | 0 | 0 | 45 | 2.2 | 1134 | 2.0 | 2268 | 2.6 | 9 | Comp.ex. |
| 52 | T | 64.0 | 0 | 36 | 0.0 | 0 | 0 | 0 | 36 | 9.2 | 1462 | 14.3 | 20907 | 9.4 | 9 | Inv.ex. |
| 53 | T | 81.0 | 6 | 13 | 0.0 | 0 | 0 | 0 | 13 | 7.9 | 753 | 3.2 | 2410 | 5.5 | 8 | Comp.ex. |
| 54 | T | 63.0 | 0 | 34 | 0.0 | 0 | 0 | 3 | 37 | 114 | 1474 | 15.7 | 23142 | 15.5 | 9 | Inv.ex. |
| 55 | T | 80.0 | 7 | 13 | 0.0 | 0 | 0 | 0 | 13 | 11.2 | 731 | 3.6 | 2632 | 16.3 | 11 | Comp.ex. |
| 56 | U | 36.0 | 0 | 12 | 0.0 | 7 | 0 | 45 | 57 | 3.1 | 1457 | 7.1 | 10345 | 4.9 | 9 | Comp.ex. |
| 57 | U | 35.0 | 0 | 11 | 0.0 | 6 | 0 | 48 | 59 | 2.4 | 1462 | 5.9 | 8626 | 3.6 | 10 | Comp.ex. |
| 58 | V | 74.0 | 0 | 26 | 0.0 | 0 | 0 | 0 | 26 | 9.3 | 1072 | 14.2 | 15222 | 9.7 | 11 | Inv.ex. |
| 59 | V | 73.0 | 0 | 25 | 0.0 | 0 | 0 | 2 | 27 | 14.6 | 1094 | 15.1 | 16519 | 18.7 | 11 | Inv.ex. |
| 60 | N | 53.0 | 0 | 22 | 0.0 | 0 | 0 | 25 | 47 | 12.5 | 1223 | 11.2 | 13698 | 10.8 | 14 | Inv.ex. |
| 61 | N | 55.0 | 0 | 21 | 0.0 | 0 | 0 | 24 | 45 | 11.9 | 1246 | 10.5 | 13083 | 12.6 | 12 | Inv.ex. |

| Ex no. | Steel type | Tempered martensite area rate (%) | Ferrite area rate (%) | Residual austenite area rate (%) | Cementite area rate (%) | Bainite area rate (%) | Tempered bainite area rate (%) | Fresh martensite area rate (%) | Fresh martensite+ residual austenite area rate (%) | Ratio of mixed structures with aspect ratio of 1.5 or more and angle with respect to rolling direction of 30° to 60° with respect to all mixed structures (%) | TS (MPa) | uEL (%) | TS×uEL | Stretch flangeability (%) | Pitch of austenite bands (μm) | Remarks |
|---|---|---|---|---|---|---|---|---|---|---|---|---|---|---|---|---|
| 62 | N | 56.0 | 0 | 19 | 0.0 | 0 | 0 | 25 | 44 | 11.5 | 1237 | 11.2 | 13854 | 11.5 | 13 | Inv.ex. |
| 63 | N | 53.0 | 0 | 23 | 0.0 | 0 | 0 | 24 | 47 | 12.1 | 1219 | 10.4 | 12678 | 12.9 | 12 | Inv.ex. |
| 64 | N | 69.3 | 0 | 22 | 0.7 | 0 | 0 | 8 | 30 | 12.1 | 1052 | 13.8 | 14518 | 16.8 | 11 | Inv.ex. |
| 65 | N | 680 | 5 | 23 | 0.4 | 0 | 0 | 4 | 27 | 10.8 | 1032 | 4.5 | 4644 | 15.3 | 10 | Comp.ex. |
| 66 | N | 73.8 | 4 | 19 | 1.2 | 0 | 0 | 2 | 21 | 12.2 | 1029 | 9.7 | 9981 | 15.9 | 9 | Comp.ex. |
| 67 | N | 73.8 | 2 | 22 | 1.3 | 0 | 0 | 1 | 23 | 10.9 | 1042 | 13.1 | 13650 | 15.4 | 10 | Inv.ex. |
| 68 | N | 73.3 | 1 | 22 | 1.5 | 0 | 0 | 2 | 24 | 10.8 | 1036 | 12.9 | 13364 | 15.3 | 10 | Inv.ex. |

*1. All structures are fresh martensite and residual austenite, so ratio of mixed structures with aspect ratio of 1.5 or more and angle with respect to rolling direction of 30° to 60° with respect to all mixed structures cannot be prescribed.

**Claims**

1. A steel sheet **characterized by** containing, by mass%,
C: greater than 0.10% and less than 0.55%,
Si: 0.001% or more and less than 3.50%,
Mn: greater than 4.00% and less than 9.00%,
sol. Al: 0.001% or more and less than 3.00%,
P: limited to 0.100% or less,
S: limited to 0.010% or less,
N: limited to less than 0.050%,
O: limited to less than 0.020%, and
a balance of iron and unavoidable impurities,
wherein a metal structure at a position of 1/4 thickness from a surface in an L-cross-section of the steel sheet comprises, by area%, 25% to 90% of tempered martensite, 3% or less of ferrite, 10% to 75% of residual austenite, and 5% or less of bainite.

2. The steel sheet according to claim 1, wherein the metal structure at a position of 1/4 thickness from a surface in an L-cross-section of the steel sheet comprises, by area%, 1.0% or less of cementite.

3. The steel sheet according to claim 1 or 2, wherein

   the metal structure at a position of 1/4 thickness from a surface in an L-cross-section of the steel sheet comprises mixed structures comprised of the residual austenite and fresh martensite,
   the mixed structures account for an area rate of 10% to 75% of the metal structure as a whole,
   the residual austenite accounts for an area rate of 10% to 50% of the metal structure as a whole, and
   structures with an aspect ratio of 1.5 or more and an angle formed by the long axis with the rolling direction of 30 degrees to 60 degrees in the mixed structures account for an area rate of 10% or more of the mixed structures as a whole.

4. The steel sheet according to any one of claims 1 to 3, further containing, by mass%, one or more elements selected from the group consisting of
Cr: less than 2.00%,
Mo: 2.00% or less,
W: 2.00% or less,
Cu: 2.00% or less,
Ni: 2.00% or less,
Ti: 0.300% or less,
Nb: 0.300% or less,
V: 0.300% or less,
B: 0.010% or less,
Ca: 0.010% or less,
Mg: 0.010% or less,
Zr: 0.010% or less,
REM: 0.010% or less,
Sb: 0.050% or less,
Sn: 0.050% or less, and
Bi: 0.050% or less.

5. The steel sheet according to claim 4, further containing, by mass%, one or more elements selected from the group consisting of
Cr: 0.01% or more and less than 2.00%,
Mo: 0.01% or more and 2.00% or less,
W: 0.01% or more and 2.00% or less,
Cu: 0.01% or more and 2.00% or less, and
Ni: 0.01% or more and 2.00% or less.

6. The steel sheet according to claim 4 or 5, further containing, by mass%, one or more elements selected from the group consisting of

Ti: 0.005% or more and 0.300% or less,
Nb: 0.005% or more and 0.300% or less, and
V: 0.005% or more and 0.300% or less.

7. The steel sheet according to any one of claims 4 to 6, further containing, by mass%, one or more elements selected from the group consisting of
B: 0.0001% or more and 0.010% or less,
Ca: 0.0001% or more and 0.010% or less,
Mg: 0.0001% or more and 0.010% or less,
Zr: 0.0001% or more and 0.010% or less, and
REM: 0.0001% or more and 0.010% or less.

8. The steel sheet according to any one of claims 4 to 7, further containing, by mass%, one or more elements selected from the group consisting of
Sb: 0.0005% or more and 0.050% or less,
Sn: 0.0005% or more and 0.050% or less, and
Bi: 0.0005% or more and 0.050% or less.

9. The steel sheet according to any one of claims 1 to 8, wherein the steel sheet comprises a hot dip galvanized layer at the surface of the steel sheet.

10. The steel sheet according to any one of claims 1 to 8, wherein the steel sheet comprises a hot dip galvannealed layer at the surface of the steel sheet.

11. A method for producing a steel sheet **characterized by**

hot rolling a steel material having chemical ingredients described in any one of claims 1 and 4 to 8 to obtain a hot rolled steel sheet,
pickling and cold rolling the hot rolled steel sheet to obtain a cold rolled steel sheet,
raising a temperature of the cold rolled steel sheet by a 5 to 30°C/sec average heating rate to 650°C and holding the cold rolled steel sheet at a 740°C or more temperature region for 10 seconds or more,
cooling the steel sheet in a temperature range from the temperature held at the 740°C or more temperature region down to 500°C or less by an average cooling rate of 2°C/sec to 2000°C/sec,
cooling down the steel sheet to room temperature after the cooling, and
after the cooling down of the steel sheet to room temperature, holding the steel sheet in a 600°C or more to less than $Ac_3$ point temperature region for 5 seconds or more.

12. The method for producing a steel sheet according to claim 11, wherein the holding the steel sheet in the 600°C or more to less than $Ac_3$ point temperature region for 5 seconds or more comprises raising the temperature of the steel sheet in a 500°C to 600°C temperature range by an average 2 to 10°C/sec.

13. The method for producing a steel sheet according to claim 11 or 12, wherein the average cooling rate is 200°C/sec to 2000°C/sec.

14. The method for producing a steel sheet according to any one of claims 11 to 13, wherein the steel sheet is cooled in a temperature range from the temperature held at the 740°C or more temperature region down to 100°C or less by the average cooling rate.

15. The method for producing a steel sheet according to any one of claims 11 to 14, wherein, after the cooling by the average cooling rate, the steel sheet is hold at the 100°C to 500°C temperature region for 10 seconds to 1000 seconds.

16. The method for producing a steel sheet according to any one of claims 11 to 15, wherein, after the holding at the 600°C or more to less than $Ac_3$ point temperature region for 5 seconds or more, the steel sheet is cooled and hot dip galvanized.

17. The method for producing a steel sheet according to claim 16, wherein, after the hot dip galvanizing, an alloying treatment of the hot dip galvanization is performed at a 450°C to 620°C temperature region.

FIG. 1

## FIG. 2

## FIG. 3

## INTERNATIONAL SEARCH REPORT

| International application No. |
| --- |
| PCT/JP2018/001076 |

**A. CLASSIFICATION OF SUBJECT MATTER**
Int.Cl.    C22C38/00(2006.01)i, C22C38/06(2006.01)i, C22C38/60(2006.01)i,
            C21D9/46(2006.01)n, C21D9/52(2006.01)n

According to International Patent Classification (IPC) or to both national classification and IPC

**B. FIELDS SEARCHED**

Minimum documentation searched (classification system followed by classification symbols)
Int.Cl. C22C38/00, C22C38/06, C22C38/60, C21D9/46, C21D9/52

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2016/199922 A1 (NIPPON STEEL & SUMITOMO METAL CORPORATION) 15 December 2016, paragraphs [0042], [0071], [0072], [0076]-[0079], [0154], table 1 (steel type f), table 4 (test no. 77), table 8 (test no. 77) & TW 201713778 A & CN 107636184 A & KR 10-2018-0016518 A | 4-10 |
| A | JP 2003-138345 A (KOBE STEEL, LTD.) 14 May 2003, claim 1, paragraphs [0013], [0015], [0016], [0021]-[0024], tables 1-3 (Family: none) | 1-17 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 April 2018 (02.04.2018) | 17 April 2018 (17.04.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/001076

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2016-113649 A (KOBE STEEL, LTD.) 23 June 2016, claim 1, paragraph [0023] (Family: none) | 3 |
| P, X | JP 6213696 B1 (NIPPON STEEL & SUMITOMO METAL CORPORATION) 18 October 2017, claim 1, paragraphs [0035], [0069]-[0076], [0099], [0108], tables 1-5 (Family: none) | 1-2, 4-10 |
| P, A | JP 2017-053001 A (NIPPON STEEL & SUMITOMO METAL CORPORATION) 16 March 2017, paragraph [0025], table 1 (steel sign f), table 5 (no. 81), table 7 (no. 81) (Family: none) | 1-17 |
| P, A | JP 2017-214647 A (KOBE STEEL, LTD.) 07 December 2017, paragraphs [0029], [0033], table 1 (steel No. f), table 2-1 (no. 25), table 3-1 (no. 25) (Family: none) | 1-17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5059429 A

- JP 2012237054 A

**Non-patent literature cited in the description**

- **FURUKAWA TAKASHI ; MATSUMURA OSAMU.** Heat Treatment. Japan Society for Heat Treatment, 1997, vol. 37, 204

- **GLASBEY, CA.** An analysis of histogram-based thresholding algorithms. *CVGIP: Graphical Models and Image Processing,* 1993, vol. 55, 532-537